# EUROPEAN PATENT APPLICATION

(11) **EP 4 596 307 A1**
(43) Date of publication of application: **06.08.2025**
(21) Application number: 23871078.4
(22) Date of filing: 28.09.2023
(51) Int. Cl.: B60L 58/24, B60L 58/00, B60H 1/00

(54) **CONTROL METHOD AND VEHICLE**

(30) Priority: 29.09.2022 CN 202211204910
(71) Applicant: BYD Company Limited, Shenzhen, Guangdong 518118 (CN)
(72) Inventor: LIAN, Yubo, Shenzhen, Guangdong 518118 (CN); LING, Heping, Shenzhen, Guangdong 518118 (CN); ZHAI, Zhen, Shenzhen, Guangdong 518118 (CN); CHEN, Siliang, Shenzhen, Guangdong 518118 (CN); MA, Rui, Shenzhen, Guangdong 518118 (CN)
(74) Representative: Mathys & Squire
(86) International application number: PCT/CN2023/122863
(87) International publication number: WO 2024/067854

(57) **Abstract**

A control method and a vehicle. The control method comprises: acquiring a heat exchange signal; and controlling at least one of a first trunk line in a thermal management system and a second trunk line in the thermal management system to exchange heat with a battery, the first trunk line being used for exchanging heat with a first area of the battery, the second trunk line being used for exchanging heat with a second area of the battery, and the first area being different from the second area.

## Description

### CROSS-REFERENCE TO RELATED APPLICATIONS

The present disclosure claims priority to and benefits of Chinese Patent Application No. 2022112049102, filed on September 29, 2022. The entire content of the above-referenced application is incorporated herein by reference.

### FIELD

The present disclosure relates to the field of vehicles, and in particular, to a control method and a vehicle.

### BACKGROUND

In an existing architecture of a heat pump system for heat management of a whole vehicle, functions of the heat management system are simple, heat exchange for a battery module often cannot meet battery temperature requirements, energy loss is large, and an operating efficiency of the heat management system is low.

### SUMMARY

The present disclosure aims to resolve at least one of the technical problems existing in the related art. Therefore, the present disclosure provides a control method, to exchange heat with a battery at different efficiencies or in different heat management modes.

The control method according to embodiments of the present disclosure is applicable to a heat management system. The control method includes: obtaining a heat exchange signal; and controlling at least one of a first trunk line in the heat management system and a second trunk line in the heat management system to exchange heat with a battery, the first trunk line being configured to exchange heat with a first area in the battery, the second trunk line being configured to exchange heat with a second area in the battery, and the first area being different from the second area.

According to the control method of the heat management system in the embodiments of the present disclosure, at least one of the first trunk line and the second trunk line is controlled to exchange heat with the battery, so that a battery heat exchange module exchanges heat with the battery at different efficiencies or in different heat management modes. For example, based on a battery temperature, the battery heat exchange module can exchange heat with the battery at a proper efficiency or in different heat management modes, so that energy consumption of the heat management system can be reduced, and a functionality of the heat management system can be improved.

In some embodiments of the present disclosure, a temperature of one of the first area and the second area is higher than a temperature of the other of the first area and the second area; or a temperature rise rate of the first area is higher than a temperature rise rate of the second area; or the first area is an electrode area of the battery.

In some embodiments of the present disclosure, when a first condition is met, at least one of the first trunk line and the second trunk line is controlled to cool the battery; and the first condition includes at least one of a battery temperature ≥ a first temperature threshold, a charging power ≥ a first power threshold, a discharging power ≥ a second power threshold, a charging voltage ≥ a first voltage threshold, a discharging voltage ≥ a second voltage threshold, a charging current ≥ a first current threshold, a discharging current ≥ a second current threshold, or a user cooling instruction.

In some embodiments of the present disclosure, when a second condition is met, at least one of the first trunk line and the second trunk line is controlled to heat the battery; and the second condition includes at least one of a battery temperature ≤ a second temperature threshold, a discharging power ≤ a third power threshold, a discharging voltage ≤ a third voltage threshold, a discharging current ≤ a third current threshold, ending of battery self-heating, or a user heating instruction.

In some embodiments of the present disclosure, heat exchange parameters of the first trunk line and the second trunk line are different.

In some embodiments of the present disclosure, heat exchange parameters of a first heat exchange unit and a second heat exchange unit are different; and the first heat exchange unit is configured to exchange heat with the first area and is arranged in the first trunk line, and the second heat exchange unit is configured to exchange heat with the second area and is arranged in the second trunk line.

In some embodiments of the present disclosure, that the heat exchange parameters are different includes: heat exchange quantities are different or heat exchange efficiencies are different.

In some embodiments of the present disclosure, a flow rate of the first trunk line and a flow rate of the second trunk line are different.

In some embodiments of the present disclosure, a pressure of the first trunk line and a pressure of the second trunk line are different, causing the flow rates to be different.

In some embodiments of the present disclosure, the control method further includes: when a third condition is met, heat exchange parameters of the first trunk line and the second trunk line are different.

In some embodiments of the present disclosure, the third condition includes: a temperature rise rate V_{H} of the first area ≥ a first rate threshold; or a difference V₀ between the temperature rise rate of the first area and the temperature rise rate of the second area ≥ a first temperature rise threshold; or a difference T₀ between a temperature T_{H} of the first area and a temperature T_{L} of the second area ≥ a third temperature threshold, where T₀ = T_{H} - T_{L}.

In some embodiments of the present disclosure, the temperature T_{H} of the first area is a maximum temperature of the battery, and the temperature T_{L} of the second area is a minimum temperature of the battery.

In some embodiments of the present disclosure, the control method further includes: when a fourth condition is met, at least one of the first trunk line and the second trunk line cools the battery, the heat exchange parameters of the first trunk line and the second trunk line being different.

In some embodiments of the present disclosure, the fourth condition includes: a battery temperature ≥ a fourth temperature threshold.

In some embodiments of the present disclosure, the fourth condition includes: at least one of a battery charging power ≥ a first threshold, a battery discharging power ≥ a second threshold, or a motor power ≥ a third threshold.

In some embodiments of the present disclosure, the fourth condition includes: at least one of the charging voltage ≥ a third voltage threshold, or the discharging voltage ≥ a fourth voltage threshold.

In some embodiments of the present disclosure, the fourth condition includes: at least one of the charging current ≥ a fourth current threshold, or the discharging current ≥ a fifth current threshold.

In some embodiments of the present disclosure, the fourth condition includes at least one of the ending of battery self-heating or an area cooling instruction inputted by a user.

In some embodiments of the present disclosure, the control method further includes: when a fifth condition is met, at least one of the first trunk line and the second trunk line heats the battery, the heat exchange parameters of the first trunk line and the second trunk line being different.

In some embodiments of the present disclosure, the fifth condition includes: the battery temperature ≤ a fifth temperature threshold.

In some embodiments of the present disclosure, the fifth condition includes: at least one of a battery charging power ≤ a fourth threshold, or a battery discharging power ≤ a fifth threshold.

In some embodiments of the present disclosure, the fifth condition includes: at least one of the discharging voltage ≤ a fifth voltage threshold, or the discharging current ≤ a sixth current threshold.

In some embodiments of the present disclosure, the fifth condition includes: at least one of the charging voltage ≤ a sixth voltage threshold, a charging current ≤ a seventh current threshold, or an area heating instruction inputted by a user.

In some embodiments of the present disclosure, the first area is preferentially cooled, where the temperature of the first area of the battery is higher than the temperature of the second area; or the temperature rise rate of the first area of the battery is higher than the temperature rise rate of the second area of the battery; or the first area of the battery is the electrode area of the battery, and the second area of the battery is a non-electrode area of the battery.

In some embodiments of the present disclosure, when a sixth condition is met, the first area is preferentially cooled.

In some embodiments of the present disclosure, the sixth condition includes: the difference between the temperature of the first area and the temperature of the second area ≥ a first temperature difference threshold, and the battery temperature ≥ the fourth temperature threshold; or the difference between the temperature rise rate of the first area and the temperature rise rate of the second area ≥ a first rate difference threshold, and the battery temperature ≥ the fourth temperature threshold.

In some embodiments of the present disclosure, that the first area is preferentially cooled includes: a flow rate of a heat exchange medium in the first trunk line is greater than a flow rate of a heat exchange medium in the second trunk line.

In some embodiments of the present disclosure, a difference between the flow rate of the heat exchange medium in the first trunk line and the flow rate of the heat exchange medium in the second trunk line ≥ a first flow rate threshold.

In some embodiments of the present disclosure, that the first area is preferentially cooled includes: A temperature of a heat exchange medium at an inlet end of the first trunk line is lower than a temperature of a heat exchange medium at an inlet end of the second trunk line.

In some embodiments of the present disclosure, that the first area is preferentially cooled includes: A pressure at an outlet end of the first trunk line is less than a pressure at an outlet end of the second trunk line.

In some embodiments of the present disclosure, the second area is preferentially heated, where the temperature of the first area of the battery is higher than the temperature of the second area; or the temperature rise rate of the first area of the battery is higher than the temperature rise rate of the second area of the battery; or the first area of the battery is the electrode area of the battery, and the second area of the battery is a non-electrode area of the battery.

In some embodiments of the present disclosure, when a seventh condition is met, the second area is preferentially heated.

In some embodiments of the present disclosure, the seventh condition includes: the difference between the temperature of the first area and the temperature of the second area ≥ a second temperature difference threshold, and the battery temperature ≤ the fifth temperature threshold; or the difference between the temperature rise rate of the first area and the temperature rise rate of the second area ≥ a second rate difference threshold, and the battery temperature ≤ the fifth temperature threshold.

In some embodiments of the present disclosure, that the second area is controlled to be preferentially heated includes: a flow rate of a heat exchange medium in the second trunk line is greater than a flow rate of a heat exchange medium in the first trunk line.

In some embodiments of the present disclosure, a difference between the flow rate of the heat exchange medium in the second trunk line and the flow rate of the heat exchange medium in the first trunk line ≥ a second flow rate threshold.

In some embodiments of the present disclosure, that the second area is controlled to be preferentially heated includes: a temperature of a heat exchange medium at an inlet end of the second trunk line is higher than a temperature of a heat exchange medium at an inlet end of the first trunk line.

In some embodiments of the present disclosure, a difference between the temperature of the heat exchange medium at the inlet end of the second trunk line and the temperature of the heat exchange medium at the inlet end of the first trunk line ≥ a sixth threshold.

In some embodiments of the present disclosure, that the second area is preferentially heated includes: a pressure at an outlet end of the second trunk line is greater than a pressure at an outlet end of the first trunk line.

In some embodiments of the present disclosure, when an eighth condition is met, the first area stops being preferentially cooled, and/or the second area stops being preferentially heated; and the temperature of the first area of the battery is higher than the temperature of the second area; or the temperature rise rate of the first area of the battery is higher than the temperature rise rate of the second area of the battery; or the first area of the battery is the electrode area of the battery, and the second area of the battery is a non-electrode area of the battery.

In some embodiments of the present disclosure, the eighth condition includes: a temperature difference between the first area and the second area is less than a seventh threshold; or the temperature rise rates of the first area and the second area are the same; or the difference between the temperature rise rates of the first area and the second area is less than an eighth threshold.

According to the embodiments of the present disclosure, a vehicle is provided, which performs the control method for the heat management system according to the foregoing embodiments of the present disclosure.

According to the vehicle in the embodiments of the present disclosure, at least one of the first trunk line and the second trunk line is controlled to exchange heat with the battery, so that a battery heat exchange module exchanges heat with the battery at different efficiencies or in different heat management modes. For example, based on a battery temperature, the battery heat exchange module can exchange heat with the battery at a proper efficiency or in different heat management modes, so that energy consumption of the heat management system can be reduced, and a functionality of the heat management system can be improved.

Additional aspects and advantages of the present disclosure will be given in the following descriptions, some of which will become apparent from the following descriptions or may be learned from practices of the present disclosure.

### BRIEF DESCRIPTION OF THE DRAWINGS

The foregoing and/or additional aspects and advantages of the present disclosure become apparent and comprehensible in the descriptions made with reference to the following accompanying drawings, where:
FIG. 1 is a schematic structural diagram of a heat management system according to an embodiment of the present disclosure;
FIG. 2 is a schematic structural diagram of a heat management system and a dynamic heat management subsystem according to an embodiment of the present disclosure;
FIG. 3 is a schematic diagram of a first implementation of a battery core according to an embodiment of the present disclosure;
FIG. 4 is a schematic diagram of a second implementation of a battery core according to an embodiment of the present disclosure;
FIG. 5 is a schematic diagram of a first implementation of a battery pack according to an embodiment of the present disclosure;
FIG. 6 is a schematic diagram of a second implementation of a battery pack according to an embodiment of the present disclosure;
FIG. 7 is a schematic structural diagram of a heat management system according to an embodiment of the present disclosure; and
FIG. 8 is a schematic diagram of a vehicle according to some embodiments of the present disclosure.

In the drawings:
Vehicle 1000,
heat management system 100, dynamic heat management subsystem 200, high-pressure heat management subsystem 201, engine heat management subsystem 202, battery 300, battery core 301, non-electrode heat generation temperature area 301a, electrode heat generation temperature area 301b,
air conditioner circulation loop 101, coolant circulation system 102,
first trunk line 10a, second trunk line 10b, first air exhaust channel 10c, second air exhaust channel 10d, third air exhaust channel 10e, bypass flow channel 10f, series branch 10g,
compressor 11, first heat exchanger 12, in-vehicle condenser 120, second heat exchanger 13, out-of-vehicle condenser 130, third heat exchanger 14, evaporator 140, gas-liquid separator 15,
first heat exchange assembly 21, second heat exchange assembly 22,
first sensor 31, second sensor 32, third sensor 33, fourth sensor 34, fifth sensor 35,
first one-way valve 41, second one-way valve 42, third one-way valve 43, fourth one-way valve 44, fifth one-way valve 45,
first on-off valve 51, second on-off valve 52, third on-off valve 53, fourth on-off valve 54, fifth on-off valve 55, sixth on-off valve 56, series switch valve 57, and parallel switch valve 58,
first electronic expansion valve 61, second electronic expansion valve 62, third electronic expansion valve 63, fourth electronic expansion valve 64, fifth electronic expansion valve 65, sixth electronic expansion valve 66,
fourth heat exchanger 71, charging and distribution/motor assembly 72, first radiator 73, switching valve group 74, water pump 75, fifth heat exchanger 76, engine assembly 77, second radiator 78,
first pressure sensor 81, and first temperature sensor 82.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are merely intended to explain the disclosure and cannot be construed as a limitation to the present disclosure.

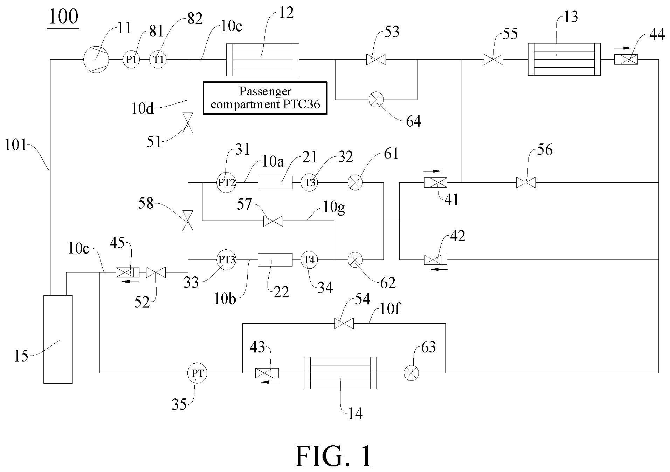

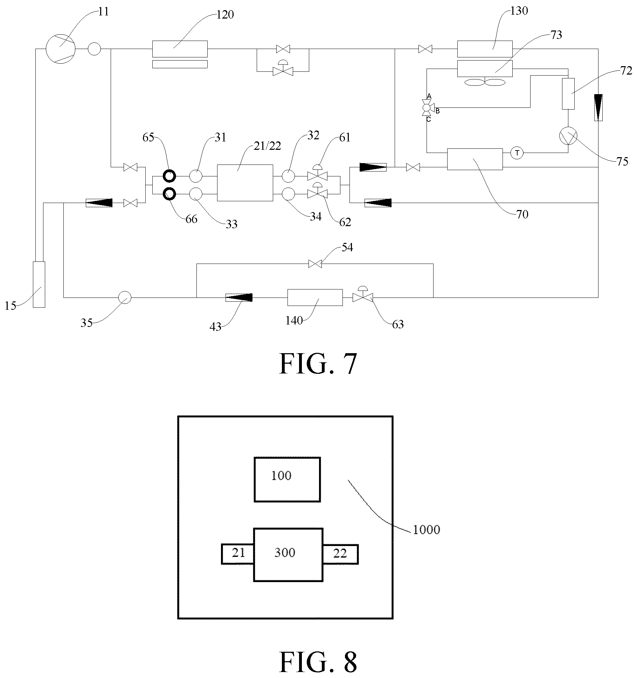

The following describes a control method according to the embodiments of the present disclosure with reference to FIG. 1, FIG. 2, and FIG. 7. The control method is applicable to a heat management system. The heat management system includes a battery heat exchange module, and the battery heat exchange module includes a first trunk line 10a and a second trunk line 10b.

The control method according to the embodiments of the present disclosure includes the following control operations.

A heat exchange signal is obtained. Specifically, the heat exchange signal may be a cooling/heating instruction sent by a user, or may be a heat exchange signal detected by a detection module. For example, if it is detected that a maximum temperature of a battery is greater than a first set temperature, the heat exchange signal is sent to perform cooling; or if it is detected that a minimum temperature of the battery is less than a second set temperature, the heat exchange signal is sent to perform heating. Certainly, it may be understood that the foregoing is merely exemplary descriptions.

In response to the heat exchange signal, at least one of the first trunk line in the heat management system and the second trunk line in the heat management system controlled to exchange heat with the battery, the first trunk line being configured to exchange heat with a first area in the battery, the second trunk line being configured to exchange heat with a second area in the battery, and the first area being different from the second area.

It should be noted that, that the first area is different from the second area means that the first trunk line 10a and the second trunk line 10b are placed at different positions of a battery 300, so that the first trunk line and the second trunk line may be used to perform heat exchange on different positions of the battery 300. It should be further noted that, the trunk line described in the present disclosure refers to a flow channel for circulating a heat exchange medium, and the trunk line may be a converged pipeline, a bypassing branch bypassing from the converged pipeline, or the like.

That the at least one of the first trunk line 10a and the second trunk line 10b is controlled to exchange heat with the battery 300 means that the first trunk line 10a and the second trunk line 10b may exchange heat independently. One of the first trunk line 10a and the second trunk line 10b may be controlled to exchange heat with the battery 300, or the first trunk line 10a and the second trunk line 10b may be controlled to exchange heat with the battery 300 simultaneously.

When the battery needs a large heat exchange quantity, the first trunk line 10a and the second trunk line 10b may exchange heat at the same time. When the battery needs a small heat exchange quantity, one of the first trunk line 10a and the second trunk line 10b may exchange heat.

According to the control method of the heat management system in the embodiments of the present disclosure, at least one of the first trunk line 10a and the second trunk line 10b is controlled to exchange heat with the battery 300, so that a battery heat exchanges module exchange heat with the battery at different efficiencies or in different heat management modes. For example, based on a battery temperature, the battery heat exchange module can exchange heat with the battery at a proper efficiency or in different heat management modes, so that energy consumption of a heat management system 100 can be reduced, and a functionality of the heat management system 100 can be improved.

In some embodiments of the present disclosure, a temperature of one of the first area and the second area is higher than a temperature of the other one, in other words, temperatures of the first area and the second area are different. It should be noted that, that the temperatures are different means that the temperatures of the first area and the second area are different when the battery is in an operating state. The operating state of the battery includes charging, discharging, and the like. That the temperatures are different may include: an average temperature of the first area is different from an average temperature of the second area; or a maximum temperature of the first area is different from a maximum temperature of the second area; or a minimum temperature of the first area is different from a minimum temperature of the second area. Alternatively, it is only required that a temperature of at least a part of the first area be different from a temperature of at least part of the second area at a same detection time point. In some specific examples of the present disclosure, the first area includes an electrode heat generation temperature area of the battery 300, and the second area includes a non-electrode heat generation temperature area of the battery 300.

In some embodiments of the present disclosure, an average temperature T1 of the first area is different from an average temperature T2 of the second area. In other words, the average temperature of the first area is T1, the average temperature of the second area is T2, and T1 is different from T2. A difference between the average temperature of the first area and the average temperature of the second area is greater than a first temperature difference. The first temperature difference is used to represent uniformity of charging and discharging performance of the battery in the first area and the second area. For example, a blade lithium iron phosphate battery is used as an example. A difference between the average temperature T1 of the first area and the average temperature T2 of the second area is ΔT1. When ΔT1 < 5°C, it may be considered that the uniformity of the charging and discharging performance of the battery in the first area and the second area is good. When ΔT1 > 5°C, it may be considered that the uniformity of the charging and discharging performance of the battery in the first area and the second area is poor.

Therefore, area heating and cooling can be performed on the battery based on the average temperature of the area, to improve temperature uniformity of the battery.

In some embodiments of the present disclosure, the maximum temperature of the first area and the maximum temperature of the second area are different, and a difference between the maximum temperature of the first area and the maximum temperature of the second area is greater than a second temperature difference. The second temperature difference is used to represent the uniformity of the charging and discharging performance of the battery in the first area and the second area. For example, a blade lithium iron phosphate battery is used as an example. A difference between the maximum temperature T3 of the first area and the maximum temperature T4 of the second area is ΔT2. When ΔT2 < 5°C, it may be considered that the uniformity of the charging and discharging performance of the battery in the first area and the second area is good. When ΔT2 > 5°C, it may be considered that the uniformity of the charging and discharging performance of the battery in the first area and the second area is poor. Therefore, area cooling can be performed on the battery based on maximum temperatures of different areas of the battery, to improve the temperature uniformity of the battery.

In some embodiments of the present disclosure, the minimum temperature of the first area and the minimum temperature of the second area are different, and a difference between the minimum temperature of the first area and the minimum temperature of the second area is greater than a third temperature difference. The third temperature difference is used to represent the uniformity of the charging and discharging performance of the battery in the first area and the second area. For example, a blade lithium iron phosphate battery is used as an example. A difference between the minimum temperature T5 of the first area and the minimum temperature T6 of the second area is ΔT3. When ΔT3 < 5°C, it may be considered that the uniformity of the charging and discharging performance of the battery in the first area and the second area is good. When ΔT3 > 5°C, it may be considered that the uniformity of the charging and discharging performance of the battery in the first area and the second area is poor.

Therefore, area heating can be performed on the battery based on minimum temperatures of different areas of the battery, thereby improving the temperature uniformity of the battery.

It should be noted that ΔT1, ΔT2, and ΔT3 may be the same or different, and are specifically set based on battery parameters. The battery parameters may include: a battery capacity, a shape of the battery (a cylinder, a square, a long blade, a short blade, and the like), a material of the battery (a lithium iron phosphate battery, a lithium battery, and the like), and a form of the battery (a liquid battery, a solid battery, a semi-solid battery, and the like).

In some embodiments of the present disclosure, a temperature rise rate of the first area is higher than a temperature rise rate of the second area, that is, the temperature rise rate of the first area and the temperature rise rate of the second area are different. It should be noted that, that the temperature rise rates are different means that the temperature rise rate of the first area and the temperature rise rate of the second area are different when the battery is in the operating state. The operating state of the battery includes charging, discharging, and the like. In this way, independent heat exchange can be realized in the first area and the second area by using the first trunk line 10a and the second trunk line 10b, to implement area temperature control.

For example, when the temperature rise rate of the first area is greater than the temperature rise rate of the second area, or the temperature of the first area is higher than the temperature of the second area, a heat exchange quantity of the first trunk line 10a and a heat exchange quantity of the second trunk line 10b may be caused to be different, for example, the temperature of the heat exchange medium in the first trunk line 10a is caused to be lower than the temperature of the heat exchange medium in the second trunk line 10b during cooling, so that a temperature drop rate of the first area is faster, thereby implementing the temperature uniformity of the battery 300.

Generally, when the battery 300 operates, an electrode generates a large amount of heat, so that a temperature of an area near the electrode is higher than a temperature of an area far away from the electrode. In some examples of the present disclosure, the first area includes the electrode heat generation temperature area, and the second area includes the non-electrode heat generation temperature area of the battery 300. Therefore, the temperature uniformity of the battery can be further improved.

In some embodiments of the present disclosure, when a first condition is met, at least one of the first trunk line and the second trunk line is controlled to cool the battery. The first condition includes at least one of a battery temperature ≥ a first temperature threshold, a charging power ≥ a first power threshold, a discharging power ≥ a second power threshold, a charging voltage ≥ a first voltage threshold, a discharging voltage ≥ a second voltage threshold, a charging current ≥ a first current threshold, a discharging current ≥ a second current threshold, or a user cooling instruction. It should be noted that, when at least one of the following conditions is met: a charging power ≥ a first power threshold, a discharging power ≥ a second power threshold, a charging voltage ≥ a first voltage threshold, a discharging voltage ≥ a second voltage threshold, a charging current ≥ a first current threshold, or a discharging current ≥ a second current threshold, it indicates that the battery temperature is high, and in this case, the battery needs to be cooled. Therefore, according to an actual situation, the at least one of the first trunk line and the second trunk line may be controlled to cool the battery. The battery temperature in "a battery temperature ≥ a first temperature threshold" may be an average temperature of the battery or a maximum temperature of the battery.

In some embodiments of the present disclosure, when it is determined that the maximum temperature of the battery ≥ 38°C, at least one of the first trunk line and the second trunk line is controlled to cool the battery. When it is determined that the maximum temperature of the battery ≤ 34°C, cooling is stopped.

In some embodiments of the present disclosure, the first area is an electrode area of the battery, and the second area is a non-electrode area of the battery. when at least one of the following conditions is met: the charging power ≥ the first power threshold, the discharging power ≥ the second power threshold, the charging voltage ≥ the first voltage threshold, the discharging voltage ≥ the second voltage threshold, the charging current ≥ the first current threshold, or the discharging current ≥ the second current threshold, it indicates that a heat generation amount of the electrode is large, so that a temperature of the first area is high. Therefore, at least the first trunk line is controlled to cool the first area.

It should be noted that, the first temperature threshold, the first power threshold, the second power threshold, the first voltage threshold, the second voltage threshold, the first current threshold, and the second current threshold may be set according to an actual situation, for example, may be specifically set based on the battery parameters. The battery parameters may include: the battery capacity, the shape of the battery (a cylinder, a square, a long blade, a short blade, and the like), the material of the battery (a lithium iron phosphate battery, a lithium battery, and the like), and the form of the battery (a liquid battery, a solid battery, a semi-solid battery, and the like).

In some embodiments of the present disclosure, when a second condition is met, at least one of the first trunk line and the second trunk line is controlled to heat the battery. The second condition includes at least one of a battery temperature ≤ a second temperature threshold, a discharging power ≤ a third power threshold, a discharging voltage ≤ a third voltage threshold, a discharging current ≤ a third current threshold, ending of battery self-heating, or a user heating instruction. The battery temperature in "a battery temperature ≤ a second temperature threshold" may be the average temperature of the battery or a minimum temperature of the battery.

It should be noted that, an ambient temperature affects the discharging power and the discharging voltage of the battery. When at least one of the following conditions is met: the discharging power ≤ the third power threshold, the discharging voltage ≤ the third voltage threshold, or the discharging current ≤ the third current threshold, it indicates that the discharging power, the discharge voltage, or the discharge current is small due to an excessively low temperature of the battery caused by the ambient temperature. In this case, at least one of the first trunk line and the second trunk line is controlled to heat the battery.

In some embodiments of the present disclosure, when the minimum temperature of the battery ≤ 10°C, at least one of the first trunk line and the second trunk line is controlled to heat the battery. When the minimum temperature of the battery ≥ 12°C, heating is stopped.

In some embodiments of the present disclosure, heat exchange parameters of the first trunk line and the second trunk line are different. That the heat exchange parameters are different include cases such as flow rates of heat exchange mediums are different, temperatures of the heat exchange mediums are different, and the like. By making the heat exchange parameters of the first trunk line and the second trunk line different, area heat exchange control of the first area and the second area can be implemented. For example, when a heat exchange requirement of the first area is higher than a heat exchange requirement of the second area, the first trunk line is controlled to preferentially perform heat exchange on the first area, so that the first area cools down or heats up faster, and the temperature uniformity of the battery is improved.

Further, that the heat exchange parameters are different includes: heat exchange quantities are different or heat exchange efficiencies are different.

The heat exchange quantity refers to heat dissipated through the first trunk line or the second trunk line into the air per unit time, and heat exchange efficiency = (heat exchange quantity ÷ time)/(heat exchange medium flow rate × temperature difference), where heat exchange quantity ÷ time refers to total heat of the heat exchange medium in the first trunk line or the second trunk line within a specific period, the flow rate refers to a flow rate of fluid in the first trunk line or the second trunk line, the temperature difference refers to a temperature difference between an inlet end and an outlet end of the first trunk line or a temperature difference between an inlet end and an outlet end of the second trunk line. Therefore, controlling the flow rate of the heat exchange medium and controlling the temperature difference of the heat exchange medium can make the heat exchange efficiencies of the first trunk line and the second trunk line different. A higher heat exchange efficiency and a larger heat exchange quantity can enhance a cooling or heating effect of the area, and the first trunk line and the second trunk line are respectively arranged corresponding to the first area and the second area, where the first area and the second area may be areas with different heat generation amounts or areas with different temperature rise rates, so that area heat dissipation is implemented. An area (the first area) with a larger heat generation amount and a higher temperature rise rate is provided with the first trunk line with a larger heat exchange efficiency, and an area (the second area) with a smaller heat generation amount and a lower temperature rise rate is provided with the second trunk line with a smaller heat exchange efficiency, to consider both energy consumption and the temperature uniformity of the battery.

In some embodiments of the present disclosure, heat exchange parameters of a first heat exchange unit and a second heat exchange unit are different. The first heat exchange unit is configured to exchange heat with the first area and is arranged in the first trunk line, and the second heat exchange unit is configured to exchange heat with the second area and is arranged in the second trunk line.

The first heat exchange unit and the second heat exchange unit may be heat exchange members such as heat exchangers or winding heat exchange tubes, so that the first heat exchange unit 21 and the second heat exchange unit 22 are provided to facilitate heat exchange with the battery 300.

Generally, when the battery 300 operates, the electrode generates a large amount of heat, so that a temperature of an area near the electrode is higher than a temperature of an area far away from the electrode. In some examples of the present disclosure, the first area includes the electrode heat generation temperature area, and the second area includes the non-electrode heat generation temperature area of the battery 300. Therefore, the temperature uniformity of the battery can be further improved.

Further, on one side or both sides of the battery, an electrode heat generation temperature area 301b is provided with the first heat exchange unit 21 correspondingly, and the second heat exchange unit 22 is arranged in a non-electrode heat generation temperature area 301a of the battery.

In some examples of the present disclosure, the first heat exchange unit 21 and the second heat exchange unit 22 are located on a same side of the battery 300, and at least one of the first heat exchange unit 21 and the second heat exchange unit 22 may be selected based on temperatures of different places in the battery to exchange heat, to implement temperature control of different areas on a same side of the battery, improve the temperature uniformity of the battery, and improve battery performance. Certainly, it may be understood that the first heat exchange unit 21 and the second heat exchange unit 22 may alternatively be arranged on different sides of the battery 300. In comparison with being arranged on the same side of the battery, when being arranged on the different sides of the battery, the first heat exchange unit 21 and the second heat exchange unit 22 can heat different areas of the battery, which can further improve the temperature uniformity of the battery and improve the battery performance.

The first heat exchange unit 21 and the second heat exchange unit 22 may be in contact with a battery core of the battery and directly exchange heat with the battery core. For example, the first heat exchange unit 21 and the second heat exchange unit 22 may be an upper cover of the battery, or the first heat exchange unit 21 and the second heat exchange unit 22 may be a lower cover of the battery.

The first heat exchange unit 21 and the second heat exchange unit 22 may be in contact with a battery pack, to indirectly exchange heat with the battery core.

The first heat exchange unit 21 and the second heat exchange unit 22 may be areas corresponding to different pipelines on a same heat exchange plate, in other words, a pipeline in the first heat exchange unit 21 and a pipeline in the second heat exchange unit 22 may be located on the same heat exchange plate.

The first heat exchange unit 21 and the second heat exchange unit 22 may alternatively be separate components.

In some embodiments of the present disclosure, a flow rate of the first trunk line and a flow rate of the second trunk line are different. Therefore, heat exchange quantities of the first trunk line and the second trunk line are different. For example, when the first area needs to be preferentially cooled, the flow rate of the first trunk line may be greater than the flow rate of the second trunk line. Alternatively, when the second area needs to be preferentially heated, the flow rate of the second trunk line may be greater than the flow rate of the first trunk line. It should be noted that, the heat exchange medium in the first trunk line may be a refrigerant or water. The heat exchange medium in the second trunk line may be a refrigerant or water. In some examples of the present disclosure, the flow rates of the first heat exchange unit and the second heat exchange unit are different, to facilitate area control of the battery, so that the temperature uniformity of the battery is improved.

In some embodiments of the present disclosure, a pressure of the first trunk line and a pressure of the second trunk line are different, causing the flow rates to be different. Specifically, lengths of the first trunk line and the second trunk line may be different, so that the pressures of the first trunk line and the second trunk line are different. Alternatively, a pressure of a heat exchange medium flowing into the first trunk line and a pressure of a heat exchange medium flowing into the second trunk line are different, causing the flow rates to be different, thereby implementing area control.

In some embodiments of the present disclosure, the control method further includes: when a third condition is met, the heat exchange parameters of the first trunk line and the second trunk line are different. In other words, the heat exchange parameters of the first trunk line and the second trunk line are controlled to be different only when the third condition needs to be met, thereby implementing area control. When the third condition is not met, the heat exchange parameters of the first trunk line and the second trunk line may be controlled to be the same, or the first trunk line and the second trunk line may be both controlled to be not operating. Therefore, area control can be implemented only when the condition is met, so that energy consumption can be reduced.

In some embodiments of the present disclosure, the heat exchange signal and the third condition are different signals. When the heat exchange signal is obtained and the third condition is not met, at least one of the first trunk line and the second trunk line is first controlled to perform heat exchange with the battery. When the third condition is met, the heat exchange parameters of the first trunk line and the second trunk line are controlled to be different, for example, the flow rates of the first trunk line and the second trunk line may be controlled to be different. In some examples of the present disclosure, when the heat exchange signal is obtained and the battery is cooled, the flow rates of the first trunk line and the second trunk line are controlled to be the same, and when it is obtained that the third condition is met, the flow rate of the first trunk line is controlled to be different from the flow rate of the second trunk line.

In some embodiments of the present disclosure, the heat exchange signal includes determining whether the third condition is met. When the third condition is determined to be met, it is determined that the heat exchange signal is obtained. In this case, the heat exchange parameters of the first trunk line and the second trunk line are directly controlled to be different. In other words, when the heat exchange signal is obtained, the heat management system is directly controlled to enter an area control mode.

In some embodiments of the present disclosure, the third condition includes: the temperature rise rate V_{H} of the first area ≥ a first rate threshold. In other words, in this case, it is determined that the temperature rise of the first area is high, so that there is a temperature difference between the first area and the second area, and the heat exchange parameters of the first trunk line and the second trunk line are controlled to be different, to implement area control, and improve the temperature uniformity of the battery.

In some embodiments of the present disclosure, the third condition includes: a difference V0 between the temperature rise rate of the first area and the temperature rise rate of the second area ≥ a first temperature rise threshold. In other words, in this case, the temperature rise rates of the first area and the second area are different, and there is a temperature difference between the first area and the second area, so that the heat exchange parameters of the first trunk line and the second trunk line are controlled to be different, to implement area control, and improve the temperature uniformity of the battery.

In some embodiments of the present disclosure, the third condition includes: a difference T₀ between a temperature T_{H} of the first area and a temperature T_{L} of the second area ≥ a third temperature threshold, and T₀ = T_{H} - T_{L}. In other words, in this case, there is a temperature difference between the first area and the second area, and the heat exchange parameters of the first trunk line and the second trunk line are controlled to be different, to implement area control, and improve the temperature uniformity of the battery.

It should be noted that, the first rate threshold, the first temperature rise threshold, and the third temperature threshold may be set according to an actual situation, for example, may be specifically set based on the battery parameters. The battery parameters may include: the battery capacity, the shape of the battery (a cylinder, a square, a long blade, a short blade, and the like), the material of the battery (a lithium iron phosphate battery, a lithium battery, and the like), and the form of the battery (a liquid battery, a solid battery, a semi-solid battery, and the like). For another example, the first rate threshold, the first temperature rise threshold, and the third temperature threshold may be set based on charging and discharging states. In some embodiments of the present disclosure, if the temperature rise rate of the first area ≥ 2.5°C/min, and the temperature rise rate of the second area < 2.5°C/min or the temperature rise rate of the second area < 1.5°C/min, it indicates that the temperature rise rates of the first area and the second area are different.

In some embodiments of the present disclosure, the temperature T_{H} of the first area is the maximum temperature of the battery, and the temperature T_{L} of the second area is the minimum temperature of the battery. Therefore, it can be obviously determined, based on a difference between the maximum temperature and the minimum temperature, whether there is a temperature difference between the first area and the second area, to determine whether area control needs to be performed.

In some embodiments of the present disclosure, the control method further includes: when a fourth condition is met, at least one of the first trunk line and the second trunk line cools the battery, the heat exchange parameters of the first trunk line and the second trunk line being different. In other words, when it is determined that the fourth condition is met, both the first trunk line and the second trunk line may be controlled to cool the battery, and the flow rates and/or the temperatures of the heat exchange mediums in the first trunk line and the second trunk line may be controlled to be different, to control the heat exchange parameters of the first trunk line and the second trunk line to be different. Alternatively, when it is determined that the fourth condition is met, one of the first trunk line and the second trunk line may be controlled to operate to cool the battery, and the other may be controlled to not operate.

In some embodiments of this application, the heat exchange signal may include determining whether the fourth condition is met. Therefore, when it is determined that the fourth condition is met, it may be determined that the heat exchange signal is received, and at least one of the first trunk line or the second trunk line is controlled to cool the battery, where the heat exchange parameters of the first trunk line and the second trunk line are different.

In some embodiments of the present disclosure, the heat exchange signal and the fourth condition are different signals. When the heat exchange signal is obtained and the fourth condition is not met, at least one of the first trunk line and the second trunk line is first controlled to cool the battery. When the fourth condition is met, the heat exchange parameters of the first trunk line and the second trunk line are controlled to be different, for example, the flow rates of the first trunk line and the second trunk line may be controlled to be different.

In some embodiments of the present disclosure, the fourth condition includes: a battery temperature ≥ a fourth temperature threshold. Specifically, when it is determined that the battery temperature is higher than the fourth temperature threshold, it indicates that the battery temperature is high, and the battery needs to be cooled. In this case, at least one of the first trunk line and the second trunk line is controlled to cool the battery, where the heat exchange parameters of the first trunk line and the second trunk line are different. The battery temperature in "a battery temperature ≥ a fourth temperature threshold" may be the maximum temperature of the battery or the average temperature of the battery.

In some embodiments of the present disclosure, the fourth temperature threshold > the first temperature threshold. To be specific, when it is determined that the battery temperature ≥ the fourth temperature threshold, at least one of the first trunk line and the second trunk line is first controlled to cool the battery, so that the heat exchange parameters of the first trunk line and the second trunk line are different, to implement area control. For example, the first trunk line with a larger flow rate may exchange heat with the first area with a higher temperature, to improve a cooling effect on the first area, and improve the temperature uniformity of the battery. When it is determined that the battery temperature decreases to be greater than or equal to the first temperature threshold, area control is exited, and at least one of the first trunk line and the second trunk line is controlled to cool the battery.

In some embodiments of the present disclosure, the fourth condition includes: at least one of a battery charging power ≥ a first threshold, a battery discharging power ≥ a second threshold, or a motor power ≥ a third threshold. It may be understood, when at least one of the foregoing is met, it indicates that the battery, especially, the electrode, generates large heat, and needs to be cooled. In this case, at least one of the first trunk line and the second trunk line is controlled to cool the battery, where the heat exchange parameters of the first trunk line and the second trunk line are different.

Specifically, the first threshold and the first power threshold may be the same or different, and the second threshold and the second power threshold may be the same or different. When the first threshold and the first power threshold are the same, and the second threshold and the second power threshold are the same, it may be determined, based on the battery temperature, that the first condition or the fourth condition is met. For example, when the battery temperature ≥ the fourth temperature threshold, it is determined that the fourth condition is met. For another example, the temperature difference between the first area and the second area may be determined to determine that the first condition or the fourth condition is met.

In some embodiments of the present disclosure, the fourth condition includes: at least one of the charging voltage ≥ a third voltage threshold, or the discharging voltage ≥ a fourth voltage threshold. It may be understood, when at least one of the foregoing is met, it indicates that the battery, especially, the electrode, generates large heat, and needs to be cooled. In this case, at least one of the first trunk line and the second trunk line is controlled to cool the battery, where the heat exchange parameters of the first trunk line and the second trunk line are different.

Specifically, the first voltage threshold and the third voltage threshold may be the same or different, and the second voltage threshold and the fourth voltage threshold may be the same or different. When the first voltage threshold and the third voltage threshold are the same, and the second voltage threshold and the fourth voltage threshold are the same, it may be determined, based on the battery temperature, that the first condition or the fourth condition is met. For example, when the battery temperature ≥ the fourth temperature threshold, it is determined that the fourth condition is met. In another example, the temperature difference between the first area and the second area may be determined to determine that the first condition or the fourth condition is met.

In some embodiments of the present disclosure, the fourth condition includes: at least one of the charging current ≥ a fourth current threshold, or the discharging current ≥ a fifth current threshold. In other words, when at least one of the foregoing is met, it indicates that the battery, especially, the electrode, generates large heat, and needs to be cooled. In this case, at least one of the first trunk line and the second trunk line is controlled to cool the battery, where the heat exchange parameters of the first trunk line and the second trunk line are different.

Specifically, the first current threshold and the fourth current threshold may be the same or different, and the second current threshold and the fifth current threshold may be the same or different. When the first current threshold and the fourth current threshold are the same, and the second current threshold and the fifth current threshold are the same, it may be determined, based on the battery temperature, that the first condition or the fourth condition is met. For example, when the battery temperature ≥ the fourth temperature threshold, it is determined that the fourth condition is met. In another example, the temperature difference between the first area and the second area may be determined to determine that the first condition or the fourth condition is met.

In some embodiments of the present disclosure, the first threshold is 100 kW. In other words, when a charging power ≥ 100 kW, it indicates that the battery is in a large-power charging mode at this time, for example, a fast charging mode or a super charging mode. In this case, a heat generation amount of the battery is large, and at least one of the first trunk line and the second trunk line is controlled to cool the battery.

In some embodiments of the present disclosure, if a value of the third voltage threshold is 500 V, or a value of the fourth current threshold is 200 A/250 A, it indicates that the battery is in the large-power charging mode, for example, the fast charging mode or the super charging mode. In this case, the heat generation amount of the battery is large, and at least one of the first trunk line and the second trunk line is controlled to cool the battery.

In some embodiments of the present disclosure, a value range of the first threshold is from 20 kW to 180 kW, a value range of the third voltage threshold is from 200 V to 750 V, and a value range of the fourth current threshold is from 20 A to 250 A. In some examples of the present disclosure, the foregoing values may be used for a direct current fast charging pile.

In some embodiments of the present disclosure, the value range of the first threshold is from 250 kW to 600 kW, the value range of the third voltage threshold is from 200 V to 1000 V, and the value range of the fourth current threshold is 600 A and above. In some specific examples of the present disclosure, the foregoing value may be used for a direct current large-power super charging pile. In some examples of the present disclosure, values of the first threshold, the third voltage threshold, and the fourth current threshold may be within a range of the following combinations: 350 kW (1000 V-500 A), 350 kW (1000 V-500 A), 250 kW (500 V-631 A), 100 kW (500 V-200 A), and 180 kW (1000 V-250 A). In this case, when it is determined that at least one of the first threshold, the third voltage threshold, and the fourth current threshold first meets the condition, it is determined that the fourth condition is met.

In some embodiments of the present disclosure, a maximum value of the first threshold is 100 kW, a maximum value of the third voltage threshold is 600 V, and a value of the fourth current threshold is 170 A.

In some embodiments of the present disclosure, the maximum value of the first threshold is 430 kW, the maximum value of the third voltage threshold is 800 V, and the value of the fourth current threshold is 550 A.

In some embodiments of the present disclosure, the fourth condition includes at least one of the ending of battery self-heating or an area cooling instruction inputted by a user. In other words, the user may directly determine whether to enter area cooling, and there is no need to detect the temperature parameters, so that the energy consumption can be reduced. Further, the user may input an area cooling instruction through a terminal such as a mobile phone APP or a driving computer. After self-heating of the battery ends, due to large heat generation at the electrode, there is a temperature difference between the first area and the second area, so that the battery is controlled to enter area cooling, to improve the temperature uniformity of the battery.

In some embodiments of the present disclosure, battery self-heating refers to heating the battery by using electric energy of a charging pile, and a heating manner is internal heating implemented through large-power fast charging and discharging of the battery. A heating speed is high, and a heating efficiency is high. In this way, electric energy can be supplemented by the charging pile while the battery outputs electric energy.

In some embodiments of the present disclosure, the control method further includes: when a fifth condition is met, at least one of the first trunk line and the second trunk line heats the battery, the heat exchange parameters of the first trunk line and the second trunk line being different. In other words, when it is determined that the fifth condition is met, both the first trunk line and the second trunk line may be controlled to heat the battery, and the flow rates and/or the temperatures of the heat exchange mediums in the first trunk line and the second trunk line may be controlled to be different, to control the heat exchange parameters of the first trunk line and the second trunk line to be different. Alternatively, when it is determined that the fifth condition is met, one of the first trunk line and the second trunk line may be controlled to operate to heat the battery, and the other may be controlled to not operate.

In some embodiments of this application, the heat exchange signal may include determining whether the fifth condition is met. Therefore, when it is determined that the fifth condition is met, it may be determined that the heat exchange signal is received, and at least one of the first trunk line or the second trunk line is controlled to heat the battery, where the heat exchange parameters of the first trunk line and the second trunk line are different.

In some embodiments of the present disclosure, the heat exchange signal and the fifth condition are different signals. When the heat exchange signal is obtained and the fifth condition is not met, at least one of the first trunk line and the second trunk line is first controlled to heat the battery. When the fifth condition is met, the heat exchange parameters of the first trunk line and the second trunk line are controlled to be different, for example, the flow rates of the first trunk line and the second trunk line may be controlled to be different.

In some embodiments of the present disclosure, the fifth condition includes: the battery temperature ≤ a fifth temperature threshold. Specifically, when it is determined that the battery temperature ≤ the fifth temperature threshold, it indicates that the battery temperature is low, and the battery needs to be heated. In this case, at least one of the first trunk line and the second trunk line is controlled to heat the battery, where the heat exchange parameters of the first trunk line and the second trunk line are different. The battery temperature in "a battery temperature ≤ a fifth temperature threshold" may be the minimum temperature of the battery or the average temperature of the battery.

In some embodiments of the present disclosure, the fifth temperature threshold < the second temperature threshold. To be specific, when it is determined that the battery temperature ≤ the fifth temperature threshold, the battery enters area control. At least one of the first trunk line and the second trunk line is first controlled to heat the battery, so that the heat exchange parameters of the first trunk line and the second trunk line are different. For example, the second trunk line with a larger flow rate may exchange heat with the second area with a lower temperature, to improve a heating effect on the second area, and improve the temperature uniformity of the battery. When the battery temperature rises so that it is determined that the battery temperature ≤ the second temperature threshold, area control is exited, and at least one of the first trunk line and the second trunk line is controlled to heat the battery.

In some embodiments of the present disclosure, the fifth condition includes: at least one of a battery charging power ≤ a fourth threshold, or a battery discharging power ≤ a fifth threshold. It may be understood that the battery temperature affects charging and discharging powers of the battery. When it is determined that at least one of the battery charging power ≤ the fourth threshold, or the battery discharging power ≤ the fifth threshold, it indicates that the battery temperature is excessively low, and consequently, the charging power or the discharging power cannot be increased to meet a set requirement. In this case, at least one of the first trunk line or the second trunk line is controlled to heat the battery, and the heat exchange parameters of the first trunk line and the second trunk line are controlled to be different, to increase the battery temperature.

Further, the fifth threshold and the third power threshold may be the same or different. When the fifth threshold and the third power threshold are the same, it may be determined, based on the battery temperature, that the second condition or the fifth condition is met. For example, when the battery temperature ≤ the fifth temperature threshold, it is determined that the fifth condition is met. For another example, the temperature difference between the first area and the second area may be determined to determine that the second condition or the fifth condition is met.

In some embodiments of the present disclosure, the fifth condition includes: at least one of the discharging voltage ≤ a fifth voltage threshold, or the discharging current ≤ a sixth current threshold. It may be understood that the battery temperature affects a discharging voltage and a discharging current of the battery. When it is determined that at least one of the discharging voltage ≤ the fifth voltage threshold, or the discharging current ≤ the sixth current threshold, it indicates that the battery temperature is excessively low, and consequently, the discharging voltage and the discharging current cannot be increased to meet a set requirement. In this case, at least one of the first trunk line or the second trunk line is controlled to heat the battery, and the heat exchange parameters of the first trunk line and the second trunk line are controlled to be different, to increase the battery temperature.

The fifth voltage threshold and the third voltage threshold may be the same or different, and the sixth current threshold and the third current threshold may be the same or different. When the fifth voltage threshold and the third voltage threshold are the same, and the sixth current threshold and the third current threshold are the same, it may be determined, based on the battery temperature, that the second condition or the fifth condition is met. For example, when the battery temperature ≤ the fifth temperature threshold, it is determined that the fifth condition is met. For another example, the temperature difference between the first area and the second area may be determined to determine that the second condition or the fifth condition is met.

In some embodiments of the present disclosure, the fifth condition includes: at least one of the charging voltage ≤ a sixth voltage threshold, a charging current ≤ a seventh current threshold, or an area heating instruction inputted by a user. Specifically, when it is determined that the charging voltage ≤ the sixth voltage threshold, and the charging current ≤ the seventh current threshold, it indicates that the battery temperature is low, and consequently, the charging voltage and the charging current cannot be increased to meet a set requirement. In this case, at least one of the first trunk line or the second trunk line is controlled to heat the battery, and the heat exchange parameters of the first trunk line and the second trunk line are controlled to be different, to increase the battery temperature.

In some embodiments of the present disclosure, the first area is preferentially cooled, where the temperature of the first area of the battery is higher than the temperature of the second area; or the temperature rise rate of the first area of the battery is higher than the temperature rise rate of the second area of the battery; or the first area of the battery is the electrode area of the battery, and the second area of the battery is a non-electrode area of the battery. Specifically, the temperature of the first area is higher, so that the first area needs to be preferentially cooled, and a cooling speed of the first area is higher than a cooling speed of the second area, thereby improving the temperature uniformity of the battery. Further, the preferentially cooling may refer to cooling the first area by using a larger flow rate of the heat exchange medium, or cooling the first area by using a heat exchange medium with a lower temperature.

In some embodiments of the present disclosure, when a sixth condition is met, the first area is preferentially cooled. In other words, whether the sixth condition is met needs to be determined, to determine whether to preferentially cool the first area, to avoid energy waste.

Further, the sixth condition includes: the difference between the temperature of the first area and the temperature of the second area ≥ a first temperature difference threshold, and the battery temperature ≥ the fourth temperature threshold; or the difference between the temperature rise rate of the first area and the temperature rise rate of the second area ≥ a first rate difference threshold, and the battery temperature ≥ the fourth temperature threshold.

In some embodiments of the present disclosure, that the first area is preferentially cooled includes: A flow rate of a heat exchange medium in the first trunk line is greater than a flow rate of a heat exchange medium in the second trunk line. Therefore, the first area can be cooled by using a larger flow rate of the heat exchange medium, to improve a temperature drop speed of the first area, and improve the temperature uniformity of the battery.

In some embodiments of the present disclosure, a difference between the flow rate of the heat exchange medium in the first trunk line and the flow rate of the heat exchange medium in the second trunk line ≥ a first flow rate threshold. Therefore, the flow rate of the heat exchange medium bypassing in the first trunk line can be ensured, to ensure a preferential cooling effect on the first area, and further improve the temperature uniformity of the battery.

In some embodiments of the present disclosure, that the first area is preferentially cooled includes: A temperature of a heat exchange medium at an inlet end of the first trunk line is lower than a temperature of a heat exchange medium at an inlet end of the second trunk line. Therefore, the first area can be preferentially cooled by using the heat exchange medium with the lower temperature, thereby ensuring the preferential cooling effect on the first area, and further improving the temperature uniformity of the battery.

In some embodiments of the present disclosure, that the first area is preferentially cooled includes: A pressure at an outlet end of the first trunk line is less than a pressure at an outlet end of the second trunk line. Therefore, a flow resistance in the first trunk line can be less than the flow rate of the second trunk line, so that the flow rate of the heat exchange medium bypassing into the first trunk line is larger, thereby ensuring the preferential cooling effect on the first area, and further improving the temperature uniformity of the battery.

In some embodiments of the present disclosure, the second area is preferentially heated, where the temperature of the first area of the battery is higher than the temperature of the second area; or the temperature rise rate of the first area of the battery is higher than the temperature rise rate of the second area of the battery; or the first area of the battery is the electrode area of the battery, and the second area of the battery is a non-electrode area of the battery. In other words, in this case, the temperature of the first area is lower, and therefore, the second area is preferentially heated, so that a heating speed of the second area is higher than a heating speed of the first area, thereby improving the temperature uniformity of the battery. Further, the preferentially heating in the present disclosure may refer to heating the second area by using a larger flow rate of the heat exchange medium, or heating the second area by using a heat exchange medium with a higher temperature.

In some embodiments of the present disclosure, when a seventh condition is met, the second area is preferentially heated. In other words, whether the seventh condition is met needs to be determined, to determine whether to preferentially heat the second area, to avoid energy waste.

Further, the seventh condition includes: the difference between the temperature of the first area and the temperature of the second area ≥ a second temperature difference threshold, and the battery temperature ≤ the fifth temperature threshold; or the difference between the temperature rise rate of the first area and the temperature rise rate of the second area ≥ a second rate difference threshold, and the battery temperature ≤ the fifth temperature threshold.

Further, the second temperature difference threshold and the third temperature threshold may be the same or different. The second rate difference threshold and the first temperature rise threshold may be the same or different.

In some embodiments of the present disclosure, that the second area is controlled to be preferentially heated includes: The flow rate of the heat exchange medium in the second trunk line is greater than the flow rate of the heat exchange medium in the first trunk line. Therefore, the second area is heated by using more heat exchange medium, to improve a heating speed of the second area, and improve the temperature uniformity of the battery.

Further, a difference between the flow rate of the heat exchange medium in the second trunk line and the flow rate of the heat exchange medium in the first trunk line ≥ a second flow rate threshold. Therefore, it can be ensured that the flow rate of the heat exchange medium bypassing in the second trunk line is larger, and it is ensured that the second area is heated by using more heat exchange medium, to improve the heating speed of the second area, and improve the temperature uniformity of the battery.

In some embodiments of the present disclosure, that the second area is controlled to be preferentially heated includes: The temperature of the heat exchange medium at the inlet end of the second trunk line is higher than the temperature of the heat exchange medium at the inlet end of the first trunk line. Therefore, the second area is heated by using the heat exchange medium with a higher temperature, to improve the heating speed of the second area, and improve the temperature uniformity of the battery.

Further, a difference between the temperature of the heat exchange medium at the inlet end of the second trunk line and the temperature of the heat exchange medium at the inlet end of the first trunk line ≥ a sixth threshold. Therefore, it can be ensured that the temperature of the heat exchange medium in the second trunk line is higher, and the second area can be heated by using the heat exchange medium with the higher temperature, to improve the heating speed of the second area, and improve the temperature uniformity of the battery.

In some embodiments of the present disclosure, that the second area is preferentially heated includes: The pressure at the outlet end of the second trunk line is greater than the pressure at the outlet end of the first trunk line. Therefore, flow time of the heat exchange medium in the second trunk line can be extended, thereby improving a heating effect.

In some embodiments of the present disclosure, when an eighth condition is met, the first area stops being preferentially cooled, and/or the second area stops being preferentially heated; and the temperature of the first area of the battery is higher than the temperature of the second area; or the temperature rise rate of the first area of the battery is higher than the temperature rise rate of the second area of the battery; or the first area of the battery is the electrode area of the battery, and the second area of the battery is a non-electrode area of the battery. Therefore, system energy consumption is reduced.

Further, the eighth condition includes: a temperature difference between the first area and the second area is less than a seventh threshold; or
the temperature rise rates of the first area and the second area are the same; or
the difference between the temperature rise rates of the first area and the second area is less than an eighth threshold. In other words, when it is determined that one of the eighth condition is met, it indicates that the temperature difference between the first area and the second area is small, and there is no need to perform area heat exchange control. In this case, the battery is controlled to exit area cooling control or area heating control, to reduce system energy consumption, and ensure a temperature uniformity effect.

In some embodiments of the present disclosure, when it is determined that the temperature rise rate of the first area ≥ 2.5 °C/min, or T_{H} - T_{L} = T₀, and T₀ ≥ 10°C, area control is enabled. When it is determined that the temperature rise rate of the first area < 1 °C/min, or T₀ < 10°C, area control is exited.

In some embodiments of the present disclosure, when it is determined that the temperature rise rate of the first area ≥ 2.5 °C/min, and the minimum temperature of the battery > 10°C, the battery is controlled to enter area cooling control, to control the first area to be preferentially cooled, and control the heat exchange quantity of the first trunk line to be greater than the heat exchange quantity of the second trunk line.

In some embodiments of the present disclosure, when it is determined that T₀ ≥ 10°C, and the minimum temperature of the battery > 10°C, the battery is controlled to enter area cooling control, to control the first area to be preferentially cooled, and control the heat exchange quantity of the first trunk line to be greater than the heat exchange quantity of the second trunk line.

In some embodiments of the present disclosure, when it is determined that the temperature rise rate of the first area ≥ 2.5 °C/min, and the minimum temperature of the battery < 10°C, the battery is controlled to enter area heating control, to control the second area to be preferentially heated, and control the heat exchange quantity of the second trunk line to be greater than the heat exchange quantity of the first trunk line.

In some embodiments of the present disclosure, when it is determined that T₀ ≥ 10°C, and the minimum temperature of the battery < 10°C, the battery is controlled to enter area heating control, to control the second area to be preferentially heated, and control the heat exchange quantity of the second trunk line to be greater than the heat exchange quantity of first second trunk line.

In some embodiments of the present disclosure, when it is determined that the maximum temperature of the battery ≥ 40°C, T_{H} - T_{L} = T₀, and T₀ ≥ 10°C, area control is enabled. When it is determined that the maximum temperature of the battery < 40°C, T_{H} - T_{L} = T₀, and T₀ < 10°C, area control is exited, where T_{H} is the maximum temperature of the battery, and T_{L} is the minimum temperature of the battery.

In some embodiments of the present disclosure, when it is determined that the maximum temperature of the battery ≥ 40°C, T_{H} - T_{L} = T₀, T₀ ≥ 10°C, and the minimum temperature of the battery > 10°C, the battery is controlled to enter area cooling control, to control the first area to be preferentially cooled, and control the heat exchange quantity of the first trunk line to be greater than the heat exchange quantity of the second trunk line.

In some embodiments of the present disclosure, when it is determined that the maximum temperature of the battery ≤ -10°C, T_{H} - T_{L} = T₀, T₀ ≥ 10°C, and the minimum temperature of the battery < 10°C, the battery is controlled to enter area heating control, to control the second area to be preferentially heated, and control the heat exchange quantity of the second trunk line to be greater than the heat exchange quantity of the first trunk line.

In some embodiments of the present disclosure, a first heat exchange unit 21 and a first electronic expansion valve 61 are arranged in the first trunk line 10a, the first electronic expansion valve 61 is arranged at a first end of the first heat exchange unit 21, and an opening of the first electronic expansion valve 61 is adjusted to adjust the heat exchange parameter of the first trunk line 10a.

A second heat exchange unit 22 and a second electronic expansion valve 62 are arranged in the second trunk line 10b, the second electronic expansion valve 62 is arranged at a first end of the second heat exchange unit 22, and an opening of the second electronic expansion valve 62 is adjusted to adjust the heat exchange parameter of the second trunk line. Therefore, flow rates and/or temperatures of refrigerants entering the first trunk line 10a and the second trunk line 10b can be adjusted through the first electronic expansion valve 61 and the second electronic expansion valve 62, to adjust the heat exchange parameters.

In some embodiments of the present disclosure, the first trunk line 10a further includes a fifth electronic expansion valve 65, the fifth electronic expansion valve is located at a second end of the first heat exchange unit 21, and an opening of the fifth electronic expansion valve 65 is adjusted to adjust the heat exchange parameter of the first trunk line.

The second trunk line 10b further includes a sixth electronic expansion valve 66, the sixth electronic expansion valve 66 is located at a second end of the second heat exchange unit 22, and an opening of the sixth electronic expansion valve 66 is adjusted to adjust the heat exchange parameter of the second trunk line. Specifically, flow rates and/or temperatures of refrigerants entering the first trunk line and the second trunk line can be adjusted by adjusting openings of the fifth electronic expansion valve 65 and the sixth electronic expansion valve 66, to adjust the heat exchange parameters.

Further, the first electronic expansion valve 61 is located between the first heat exchange unit 21 and an out-of-vehicle condenser 130, and the second electronic expansion valve 62 is located between the second heat exchange unit 22 and the out-of-vehicle condenser 130. When the battery 300 needs to be cooled, a refrigerant flowing out of the out-of-vehicle condenser 130 flows sequentially through the first electronic expansion valve 61, the first heat exchange unit 21, and the fifth electronic expansion valve 65, and a refrigerant flowing out of the out-of-vehicle condenser 130 flows sequentially through the second electronic expansion valve 62, the second heat exchange unit 22, and the sixth electronic expansion valve 66. Therefore, the first electronic expansion valve 61, the fifth electronic expansion valve 65, the second electronic expansion valve 62, and the sixth electronic expansion valve 66 are provided, so that the first trunk line 10a and the second trunk line 10b can be independently adjusted. For example, the flow rate and/or the temperature of the refrigerant in the first heat exchange unit 21 can be adjusted through the first electronic expansion valve 61 and the fifth electronic expansion valve 65, and the flow rate and/or the temperature of the refrigerant in the second heat exchange unit 22 can be adjusted through the second electronic expansion valve 62 and the sixth electronic expansion valve 66, so that the temperatures of the first area and the second area are independently adjusted, thereby implementing area control.

Further, an opening of at least one of the first electronic expansion valve 61, the fifth electronic expansion valve 65, the second electronic expansion valve 62, and the sixth electronic expansion valve 66 is different, so that the heat exchange quantities of the first trunk line 10a and the second trunk line 10b are different. Specifically, when the temperature of the first area is higher than that of the second area, or when the temperature rise rate of the first area is higher than the temperature rise rate of the second area, the heat exchange quantity of the first trunk line 10a is greater than the heat exchange quantity of the second trunk line 10b during cooling, so that the first area can be preferentially cooled, thereby implementing the temperature uniformity of the battery 300; and the heat exchange quantity of the first trunk line 10a is less than the heat exchange quantity of the second trunk line 10b during heating, so that the second area is preferentially heated.

In some embodiments of the present disclosure, when the temperature of the first area is higher than the temperature of the second area, the temperature difference ≥ the first temperature difference threshold, and a cooling instruction is received, the opening of the first electronic expansion valve 61 is adjusted based on an overheating degree ΔTA of the second end of the first heat exchange unit 21, and the opening of the second electronic expansion valve 62 is reduced every set time. It should be noted that, the cooling instruction may be an operation instruction issued by a user, or an instruction issued by a system when the system detects that the battery 300 needs to be cooled, for example, detects that the maximum temperature of the battery 300 is higher than a first set temperature.

Specifically, the opening of the first electronic expansion valve 61 is adjusted based on the overheating degree ΔTA of the second end of the first heat exchange unit 21, to ensure that the flow rate and/or the temperature of the refrigerant in the first heat exchange unit 21 meet/meets a cooling requirement of the first area, and by reducing the opening of the second electronic expansion valve 62 every set time, a refrigerant amount in the second heat exchange unit 22 can be reduced, to avoid overcooling of the second area, thereby implementing different heat exchange quantities of the first trunk line 10a and the second trunk line 10b, and implementing the temperature uniformity of the battery 300.

Further, when ΔTA < ΔTC, the opening of the first electronic expansion valve 61 is reduced; when ΔTA > ΔTD, the opening of the first electronic expansion valve 61 is increased; or when ΔTD ≤ ΔTA ≤ ΔTC, the first electronic expansion valve 61 maintains the current opening. In this way, it can be ensured that the flow rate and/or the temperature of the refrigerant in the first heat exchange unit 21 meet/meets the cooling effect on the first area, and overcooling of the first area can be avoided. It should be noted that, values of ΔTC and ΔTD may be defined according to an actual situation.

In some embodiments of the present disclosure, the opening of the second electronic expansion valve 62 is reduced every set time, until it is detected that the temperature difference between the first area and the second area is less than the first threshold, and the opening the second electronic expansion valve 62 resumes being adjusted based on an overheating degree ΔTB of the second end of the second heat exchange unit 22.

Specifically, when ΔTB < ΔTC2, the opening of the second electronic expansion valve 62 is reduced; when ΔTB > ΔTD2, the opening of the second electronic expansion valve 62 is increased; or when ΔTD2 ≤ ΔTB ≤ ΔTC2, the second electronic expansion valve 62 maintains the current opening. It should be noted that, values of ΔTC2 and ΔTD2 may be defined according to an actual situation.

In some embodiments of the present disclosure, a first sensor 31 is arranged between the fifth electronic expansion valve 65 and the first heat exchange unit 21, a second sensor 32 is arranged between the first electronic expansion valve 61 and the first heat exchange unit 21, a third sensor 33 is arranged between the sixth electronic expansion valve 66 and the second heat exchange unit 22, and a fourth sensor 34 is arranged between the second electronic expansion valve 62 and the second heat exchange unit 22, so that the overheating degree of the second end of the first trunk line 10a can be calculated based on a pressure/temperature detected by the first sensor 31, and the overheating degree of the second end of the second trunk line 10b can be calculated based on a pressure/temperature detected by the third sensor 33.

In some embodiments of the present disclosure, when the temperature of the first area is higher than the temperature of the second area, the temperature difference ≥ the first temperature difference threshold, and a cooling instruction is received, openings of the fifth electronic expansion valve 65 and the sixth electronic expansion valve 66 are of maximum values, so that flow resistances of the first trunk line 10a and the second trunk line 10b are reduced, and a cooling effect is ensured.

In some embodiments of the present disclosure, when the temperature of the first area is higher than the temperature of the second area, the temperature difference < the first temperature difference threshold, and a cooling instruction is received, the opening of the first electronic expansion valve 61 is adjusted based on the overheating degree ΔTA of the second end of the first heat exchange unit 21, the opening of the second electronic expansion valve 62 is adjusted based on the overheating degree ΔTB of the second end of the second heat exchange unit 22, and the openings of the fifth electronic expansion valve 65 and the sixth electronic expansion valve 66 are of the maximum values. Therefore, the cooling effect can be ensured.

When ΔTA < ΔTC1, the opening of the first electronic expansion valve 61 is reduced; when ΔTA > ΔTD1, the opening of the first electronic expansion valve 61 is increased; or when ΔTD1 ≤ ΔTA ≤ ΔTC1, the first electronic expansion valve 61 maintains the current opening. It should be noted that, values of ΔTC1 and ΔTD1 may be defined according to an actual situation.

When ΔTB < ΔTC2, the opening of the second electronic expansion valve 62 is reduced; when ΔTB > ΔTD2, the opening of the second electronic expansion valve 62 is increased; or when ΔTD2 ≤ ΔTB ≤ ΔTC2, the second electronic expansion valve 62 maintains the current opening. It should be noted that, the values of ΔTC2 and ΔTD2 may be defined according to an actual situation.

In some embodiments of the present disclosure, when the temperature of the first area is higher than the temperature of the second area, the temperature difference ≥ the second temperature difference threshold, and a heating instruction is received, the opening of the sixth electronic expansion valve 66 is of the maximum value, and the opening of the fifth electronic expansion valve 65 is reduced every set time. Therefore, the heat exchange quantities of the second trunk line 10b and the first trunk line 10a can be different, and a refrigerant temperature in the second trunk line 10b is higher than a refrigerant temperature in the first trunk line 10a and/or a refrigerant flow rate in the second trunk line 10b is greater than a refrigerant flow rate in the first trunk line 10a, so that the second area is preferentially heated, thereby implementing the temperature uniformity of the battery 300.

Further, after the opening of the fifth electronic expansion valve 65 is reduced every set time until the temperature difference is less than the second threshold, the opening of the fifth electronic expansion valve 65 stops being reduced.

It should be noted that, the heating instruction may be an operation instruction issued by a user, or an instruction issued by a system when the system detects that the battery 300 needs to be heated, for example, detects that the minimum temperature of the battery 300 is higher than a second set temperature.

In some embodiments of the present disclosure, when the temperature of the first area is higher than the temperature of the second area, the temperature difference ≥ the second temperature difference threshold, and a heating instruction is received, the opening of the first electronic expansion valve 61 is adjusted based on an overcooling degree ΔT1 of the first end of the first heat exchange unit 21, and the opening of the second electronic expansion valve 62 is adjusted based on an overcooling degree ΔT2 of the first end of the second heat exchange unit 22. Therefore, the heat exchange quantities of the first heat exchange unit 21 and the second heat exchange unit 22 can be adjusted in real time, thereby ensuring the temperature uniformity of the battery 300.

Further, when ΔT1 < ΔT3, the opening of the first electronic expansion valve 61 is reduced; when ΔTA > ΔT4, the opening of the first electronic expansion valve 61 is increased; or when ΔT4 ≤ ΔTA ≤ ΔT3, the first electronic expansion valve 61 maintains the current opening.

When ΔT2 < ΔT5, the opening of the second electronic expansion valve 62 is reduced; when ΔT2 > ΔT6, the opening of the second electronic expansion valve 62 is increased; and when ΔT6 ≤ ΔT2 ≤ ΔT5, the second electronic expansion valve 62 maintains the current opening. Therefore, the temperature uniformity of the battery 300 can be further ensured. It should be noted that, T3, T4, T5, and T6 may be set according to an actual situation.

In some embodiments of the present disclosure, when the temperature of the first area is higher than the temperature of the second area, the temperature difference is less than the second temperature difference threshold, and a heating instruction is received, the openings of the fifth electronic expansion valve 65 and the sixth electronic expansion valve 66 are of the maximum values, the opening of the first electronic expansion valve 61 is adjusted based on the overcooling degree ΔT1 of the first end of the first heat exchange unit 21, and the opening of the second electronic expansion valve 62 is adjusted based on the overcooling degree ΔT2 of the first end of the second heat exchange unit 22. Therefore, the heat exchange quantities of the first heat exchange unit 21 and the second heat exchange unit 22 can be adjusted in real time, thereby ensuring the temperature uniformity of the battery 300.

Further, when ΔT1 < ΔT7, the opening of the first electronic expansion valve 61 is reduced; when ΔTA > ΔT8, the opening of the first electronic expansion valve 61 is increased; or when ΔT8 ≤ ΔTA < ΔT7, the first electronic expansion valve 61 maintains the current opening.

When ΔT2 < ΔT9, the opening of the second electronic expansion valve 62 is reduced; when ΔT2 > ΔT10, the opening of the second electronic expansion valve 62 is increased; and when ΔT10 ≤ ΔT2 ≤ ΔT9, the second electronic expansion valve 62 maintains the current opening. Therefore, the temperature uniformity of the battery 300 can be further ensured. It should be noted that, T7, T8, T9, and T10 may be set according to an actual situation.

Further, the overcooling degree ΔT1 of the first trunk line 10a is calculated based on a pressure detected by the first sensor 31 and a temperature detected by the second sensor 32. The overcooling degree ΔT2 of the second trunk line 10b is calculated based on a pressure detected by the third sensor 33 and a temperature detected by the fourth sensor 34, so that a real-time overcooling degree can be obtained.

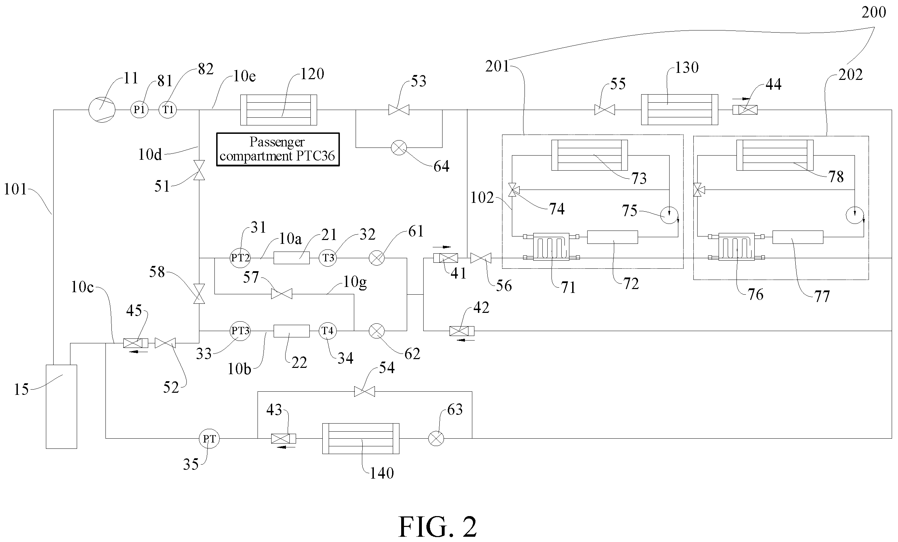

The following describes a heat management system 100 according to the embodiments of the present disclosure with reference to FIG. 1 and FIG. 2.

According to an embodiment of the present disclosure, a heat management system 100 is provided, including a battery heat exchange module and a controller. The battery heat exchange module includes a first trunk line 10a and a second trunk line 10b. A first heat exchange assembly 21 is arranged in the first trunk line 10a, a second heat exchange assembly 22 is arranged in the second trunk line 10b, and the first heat exchange assembly 21 and the second heat exchange assembly 22 are configured to exchange heat with a battery.

The heat management system 100 according to the present disclosure is applied to a vehicle. The vehicle may be an oil-fueled vehicle, a gas-fueled vehicle, a new energy vehicle, or a rail vehicle. The new energy vehicle may be a battery electric vehicle, a hybrid electric vehicle, a range extended vehicle, or the like. The battery heat exchange module in the heat management system 100 is configured to exchange heat with a battery of the vehicle. The battery may be configured to supply electricity to the vehicle. For example, the battery may be used as an operating electricitysupply of the vehicle; or the battery may be used as a driving electricity supply of the vehicle to provide driving force for the vehicle in place of or partially in place of fuel, natural gas, or the like; or the battery may be configured to supply electricity to some components of the vehicle such as a motor, so that the battery can be used for at least one operating electricity consumption requirement of starting, navigation, traveling, or the like of the vehicle.

The first heat exchange assembly 21 and the second heat exchange assembly 22 may exchange heat with the battery to adjust a temperature of the battery, so that the battery has a proper operating temperature, to ensure stable and reliable operation of the battery. For example, in winter when an ambient temperature is low, the battery may be heated, to increase a start speed of the battery. For another example, in summer when the ambient temperature is excessively high or the operating temperature of the battery is high, the battery may be cooled, to improve operating safety of the battery, and extend an operating life of the battery.

The heat management system 100 in the present disclosure further includes the controller. The controller is configured to control, based on the temperature of the battery, at least one of the first trunk line 10a and the second trunk line 10b to exchange heat. The first heat exchange assembly 21 is arranged in the first trunk line 10a, and the second heat exchange assembly 22 is arranged in the second trunk line 10b. Therefore, the controller can control one of the first heat exchange assembly 21 and the second heat exchange assembly 22 to exchange heat with the battery. Working mediums circulating in the first trunk line 10a and the second trunk line 10b may be the same or different. The working medium may be water, or may be a liquid working medium other than water, or may be another medium that can perform phase change, such as carbon dioxide or a refrigerant. For example, a liquid working medium circulates in the first trunk line 10a, and a medium that can perform phase change circulates in the second trunk line 10b. For example, the first trunk line 10a may be connected to a high-pressure cooling system or an engine cooling system for circulation of a coolant in the high-pressure cooling system or the engine cooling system, and the second trunk line 10b is connected to an air conditioning system for circulation of a medium that perform phase change in the air conditioning system.

The controller may control the first heat exchange assembly 21 to exchange heat with the battery, the controller may control the second heat exchange assembly 22 to exchange heat with the battery, or the controller may control both the first heat exchange assembly 21 and the second heat exchange assembly 22 to exchange heat with the battery. The foregoing cases may be selected according to an actual requirement of the battery.

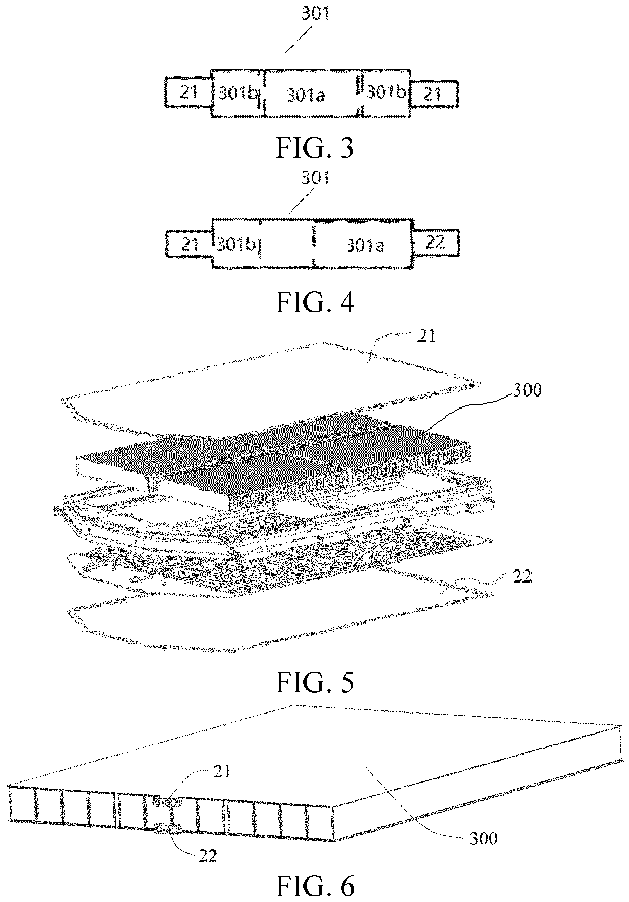

For example, referring to FIG. 5, FIG. 5 is a schematic diagram of an embodiment of a battery pack according to the present disclosure. The battery pack includes the battery, the first heat exchange assembly 21, and the second heat exchange assembly 22. The battery is arranged between the first heat exchange assembly 21 and the second heat exchange assembly 22. The first heat exchange assembly 21 is arranged on one side (an upper side) of the battery, and the second heat exchange assembly 22 is arranged on the other side (a lower side) of the battery. The first heat exchange assembly is an upper cover of the battery, and the second heat exchange assembly is a base plate of the battery. When the battery needs a large heat exchange quantity, the first trunk line 10a and the second trunk line 10b may exchange heat at the same time. When the battery needs a small heat exchange quantity, one of the first trunk line 10a and the second trunk line 10b may exchange heat. The first heat exchange assembly 21 is arranged on one side of the battery, and the second heat exchange assembly 22 is arranged on another side of the battery. When a heat generation amount on one side of the battery is higher than a normal operating temperature of the battery, the controller controls a heat exchange assembly corresponding to the side to cool the battery.

When the battery needs a large heat exchange quantity, the first trunk line 10a and the second trunk line 10b may exchange heat at the same time. When the battery needs a small heat exchange quantity, one of the first trunk line 10a and the second trunk line 10b may exchange heat. The first heat exchange assembly 21 is arranged on one side of the battery, and the second heat exchange assembly 22 is arranged on the other side of the battery. When a heat generation amount on one side of the battery is higher than a normal operating temperature of the battery, the controller controls a heat exchange assembly corresponding to the side to cool the battery.

The first heat exchange assembly 21 and the second heat exchange assembly 22 are independent assemblies and may work independently of each other, and the first trunk line and the second trunk line have different heat exchange modes. When the first heat exchange assembly 21 and the second heat exchange assembly 22 are arranged in different areas of the battery, heat exchange effects of the first heat exchange assembly 21 and the second heat exchange assembly 22 may be opposite. For example, the first heat exchange assembly 21 heats the battery, while the second heat exchange assembly 22 cools the battery, so that the temperature of the battery is uniform. The heat management modes of the battery heat exchange module include: heating or cooling by both the first trunk line and the second trunk line; and heating by one of the first trunk line and the second trunk line and cooling by the other one. Different heat management modes are selected to adapt to different temperatures in different areas of the battery, so that the temperature of the battery is uniform.

For example, referring to FIG. 3 and FIG. 4, FIG. 3 is a schematic diagram of a first implementation of a battery core according to the present disclosure; and FIG. 4 is a schematic diagram of a second implementation of the battery core according to the present disclosure. The battery includes a plurality of battery cores. The plurality of battery cores are arranged in the battery. Electrodes are arranged at two ends of the battery core 301, or an electrode is arranged at one end of the battery core 301. During operation of the battery core 301, the electrode generates a large amount of heat. An area near the electrode is an electrode heating area, and an area away from the electrode is a non-electrode heating area. Generally, when the battery 300 operates, the electrode generates a large amount of heat, so that a temperature of an area near the electrode is higher than a temperature of an area far away from the electrode. On one side or both sides of the battery, an electrode heat generation temperature area 301b is provided with the first heat exchange assembly 21 correspondingly, and the second heat exchange assembly 22 is arranged in a non-electrode heat generation temperature area 301a of the battery. When a temperature of the electrode heat generation temperature area 301b is higher than the operating temperature of the battery, the first heat exchange assembly 21 cools the electrode heat generation temperature area 301b. When a temperature of the non-electrode heat generation temperature area 301a of the battery is lower than the operating temperature of the battery, the second heat exchange assembly 22 heats the non-electrode heat generation temperature area 301a of the battery.

For example, in a working condition, an efficiency of exchanging heat with the battery by the first heat exchange assembly 21 or the second heat exchange assembly 22 alone may be lower than an efficiency of exchanging heat with the battery by the first heat exchange assembly 21 and the second heat exchange assembly 22 together. In addition, heat exchange efficiencies of the first heat exchange unit and the second heat exchange unit for the battery may also be different. Therefore, by arranging the controller, the first heat exchange assembly 21, the second heat exchange assembly 22, or a combination of the first heat exchange assembly 21 and the second heat exchange assembly 22 can exchange heat with the battery, and the battery heat exchange module can exchange heat with the battery at different efficiencies. Based on the temperature of the battery, the battery heat exchange module exchanges heat with the battery at a proper efficiency, so that energy consumption of the heat management system 100 can be reduced, and the functionality of the heat management system 100 can be improved.

According to the heat management system 100 in the embodiments of the present disclosure, the first heat exchange assembly 21 and the second heat exchange assembly 22 are provided, and the controller is provided to control at least one of the first heat exchange assembly 21 and the second heat exchange assembly 22 to exchange heat with the battery, so that the battery heat exchange module exchange heat with the battery at different efficiencies or in different heat management modes. Based on the temperature of the battery, the controller controls the battery heat exchange module to exchange heat with the battery at a proper efficiency or in different heat management modes, so that energy consumption of the heat management system 100 can be reduced, and the functionality of the heat management system 100 can be improved.

In some embodiments of the present disclosure, working mediums circulate in both the first trunk line 10a and the second trunk line 10b, and the working mediums are configured to exchange heat with the battery at the first heat exchange assembly 21 and the second heat exchange assembly 22, to heat or cool the battery.

In some embodiments of the present disclosure, the heat management system 100 further includes an air conditioner circulation loop 101, the air conditioner circulation loop 101 includes a heating branch, the first trunk line 10a is connected in parallel with the heating branch, the second trunk line 10b is connected in parallel with the heating branch, and the controller is configured to control at least one of the heating branch, the first trunk line 10a, and the second trunk line 10b to exchange heat.

The heat management system 100 further includes the air conditioner circulation loop 101, and the air conditioner circulation loop 101 is configured to perform heat exchange with a passenger compartment. For example, in winter when an ambient temperature is low, the air conditioner circulation loop 101 may heat the passenger compartment, and in summer when the ambient temperature is excessively high, the air conditioner circulation loop 101 may cool the passenger compartment, to improve user comfort. Optionally, the working medium circulates in the air conditioner circulation loop 101, and the working medium exchanges heat in a heating branch, to heat or cool the passenger compartment.

The heating branch of the air conditioner circulation loop 101 is configured to exchange heat with the passenger compartment, to heat the passenger compartment. The heating branch is connected in parallel with the first trunk line 10a and the second trunk line 10b, and the heating branch, the first trunk line 10a, and the second trunk line 10b all operate independently of each other, so that heating of the passenger compartment and heat exchange with the battery do not conflict with each other.

The controller may control the heating branch to exchange heat alone, the controller may control the first heat exchange assembly 21 in the first trunk line 10a to exchange heat alone, or the controller may control the second heat exchange assembly 22 in the second trunk line 10b to exchange heat alone. Further, the controller may control the heating branch, the first trunk line 10a, and the second trunk line 10b to cooperate with each other to perform heating. Further, the controller may control the heating branch, the first trunk line 10a, and the second trunk line 10b to exchange heat at the same time. The controller may control the heating branch to heat the passenger compartment while controlling the battery heat exchange module to heat the battery, or the controller may further control the heating branch to heat the passenger compartment while controlling the battery heat exchange module to cool the battery.

In some embodiments of the present disclosure, the air conditioner circulation loop 101 includes a cooling branch. The first trunk line 10a is connected in parallel with the cooling branch, and the second trunk line 10b is connected in parallel with the cooling branch. The controller is configured to control at least one of the cooling branch, the first trunk line 10a, and the second trunk line 10b to exchange heat. The cooling branch includes an evaporator 140 and a third electronic expansion valve 63. The third electronic expansion valve 63 is arranged between an out-of-vehicle condenser 130 and the evaporator 140. The cooling branch further includes a third one-way valve 43. The third one-way valve 43 is arranged between the evaporator 140 and a compressor 11.

The cooling branch of the air conditioner circulation loop 101 is configured to exchange heat with the passenger compartment, to cool the passenger compartment. The cooling branch is connected in parallel with the first trunk line 10a and the second trunk line 10b, and the cooling branch, the first trunk line 10a, and the second trunk line 10b all operate independently of each other, so that cooling of the passenger compartment and heat exchange with the battery do not conflict with each other.

The controller may control the cooling branch to exchange heat alone, the controller may control the first heat exchange assembly 21 in the first trunk line 10a to exchange heat alone, or the controller may control the second heat exchange assembly 22 in the second trunk line 10b to exchange heat alone. Further, the controller may control the cooling branch, the first trunk line 10a, and the second trunk line 10b to exchange heat at the same time. The controller may control the cooling branch to cool the passenger compartment while controlling the battery heat exchange module to heat the battery, or the controller may further control the cooling branch to cool the passenger compartment while controlling the battery heat exchange module to cool the battery.

In some embodiments of the present disclosure, the air conditioner circulation loop 101 includes a cooling branch and a heating branch. The first trunk line 10a is connected in parallel with the cooling branch, and the second trunk line 10b is connected in parallel with the cooling branch. The first trunk line 10a is connected in parallel with the heating branch, and the second trunk line 10b is connected in parallel with the heating branch. The controller is configured to control at least one of the heating branch, the cooling branch, the first trunk line 10a, and the second trunk line 10b to exchange heat.

The heat management system 100 further includes the air conditioner circulation loop 101, and the air conditioner circulation loop 101 is configured to perform heat exchange with the passenger compartment. For example, in winter when an ambient temperature is low, the air conditioner circulation loop 101 may heat the passenger compartment, and in summer when the ambient temperature is excessively high, the air conditioner circulation loop 101 may cool the passenger compartment, to improve user comfort. The air conditioner circulation loop 101 includes the cooling branch and the heating branch. The cooling branch of the air conditioner circulation loop 101 is configured to exchange heat with the passenger compartment, to cool the passenger compartment, and the heating branch of the air conditioner circulation loop 101 is configured to exchange heat with the passenger compartment, to cool the passenger compartment. Optionally, the working medium circulates in the air conditioner circulation loop 101, to be specific, circulates in the heating branch and the cooling branch, to heat or cool the passenger compartment.

The cooling branch is connected in parallel with the first trunk line 10a and the second trunk line 10b, and the heating branch is connected in parallel with the first trunk line 10a and the second trunk line 10b. Therefore, the cooling branch, the heating branch, the first trunk line 10a, and the second trunk line 10b all operate independently of each other, so that heat exchange with the passenger compartment and heat exchange with the battery do not conflict with each other.

The controller may control the heating branch to exchange heat alone, the controller may control the cooling branch to exchange heat alone, the controller may control the first heat exchange assembly 21 in the first trunk line 10a to exchange heat alone, or the controller may control the second heat exchange assembly 22 in the second trunk line 10b to exchange heat alone.

Further, the controller may control any combination of the cooling branch, the heating branch, the first trunk line 10a, and the second trunk line 10b to exchange heat simultaneously. The controller may control the cooling branch to cool the passenger compartment while controlling the battery heat exchange module to heat the battery, or the controller may further control the cooling branch to cool the passenger compartment while controlling the battery heat exchange module to cool the battery. The controller may control the heating branch to heat the passenger compartment while controlling the battery heat exchange module to heat the battery, or the controller may further control the heating branch to heat the passenger compartment while controlling the battery heat exchange module to cool the battery. The controller may control the cooling branch to cool the passenger compartment while controlling the heating branch to heat the passenger compartment. The controller may further control the battery unit to exchange heat for the battery while controlling the cooling branch to cool the passenger compartment and controlling the heating branch to heat the passenger compartment.

The heating branch and the cooling branch of the air conditioner circulation loop 101 are respectively connected in parallel with the first trunk line 10a and the second trunk line 10b, and operate independently of each other. When the control valve is provided, the heat management system 100 can be controlled to implement different functions, and the different functions can be synchronously performed. In this way, the heat management system 100 has a stronger functionality, and an operating efficiency of the heat management system 100 is improved.

In some embodiments of the present disclosure, the heat management system 100 further includes a storage device. The storage device is connected between an air exhaust of the compressor 11 and an air inlet of the compressor 11.

When the compressor 11 operates, a working medium flows in from the air inlet of the compressor 11. A low-temperature and low-pressure gaseous working medium is compressed by the compressor 11 and then becomes a high-temperature and high-pressure gaseous working medium, and flows out from the air exhaust of the compressor 11. The working medium may flow back to the compressor 11 again after performing heat exchange, completing a cycle.

The storage device is connected between the air exhaust of the compressor 11 and the air inlet of the compressor 11, and the storage device is configured to store the working medium and discharge the stored working medium. It may be understood that, phases of the working medium when the working medium performs heat exchange for heating and for cooling are different, and under the same mass, a volume of gaseous working medium is greater than a volume of liquid working medium, resulting in different required amounts of the working medium during heating and during cooling. The storage device is provided to store the working medium and discharge the stored working medium, so that the amount of the working medium can be supplemented or reduced based on the temperature of the battery.

It may be understood that, the liquid working medium is more convenient to store. Therefore, in some embodiments of the present disclosure, the storage device is configured so that the working medium can release heat and liquefy in the storage device, and the storage device can store the liquid working medium. The storage device is connected between the air exhaust of the compressor 11 and the air inlet of the compressor 11. The storage device may liquefy a working medium flowing out of the air exhaust of the compressor 11 and store the working medium inside the storage device.

In some embodiments of the present disclosure, the controller controls, based on the temperature of the battery, the storage device to replenish the working medium of the first trunk line 10a and/or the second trunk line 10b, and the controller may control, based on the temperature of the battery, the storage device to replenish or reduce the working medium of the first trunk line 10a and/or the second trunk line 10b.

A phase of the working medium when the working medium heats the battery is different from a phase of the working medium when the working medium cools the battery, and under the same mass, a volume of gaseous working medium is greater than a volume of liquid working medium. Therefore, a required amount of the working medium when the battery is heated is higher than a required amount of the working medium when the battery is cooled. When the battery heat exchange module heats the battery, the controller controls the storage device to discharge the stored working medium to be replenished into the first trunk line 10a and/or the second trunk line 10b, to meet the required amount of the working medium for heating the battery. When the battery heat exchange module cools the battery, the storage device stores a working medium flowing through the storage device, to reduce an amount of the working medium in the first trunk line 10a and/or the second trunk line 10b, and to meet the required amount of the working medium for cooling the battery.

In some specific embodiments of the present disclosure, the storage device is configured as a receiver drier, and the receiver drier is configured to store the liquid working medium and discharge the stored liquid working medium. The receiver drier may further filter out moisture and impurities in the working medium, to avoid damaging or blocking a working medium pipeline, and extend service life of the working medium pipeline, so that the working medium flows smoothly.

In some embodiments of the present disclosure, the air conditioner circulation loop 101 includes a compressor 11, a first heat exchanger 12, and a second heat exchanger 13. The compressor 11 includes an air inlet and an air exhaust, and the air outlet of the compressor 11, the first heat exchanger 12, the second heat exchanger 13, and the air inlet of the compressor 11 are sequentially connected.

When the air conditioner circulation loop 101 operates, a working medium flows in from the air inlet of the compressor 11. A low-temperature and low-pressure gaseous working medium is compressed by the compressor 11 and then becomes a high-temperature and high-pressure gaseous working medium, and flows out from the air exhaust of the compressor 11. A first port of the first heat exchanger 12 is connected to the air exhaust of the compressor 11, a second port of the first heat exchanger 12 is connected to the second heat exchanger 13, and the second heat exchanger 13 is connected to the air inlet of the compressor 11. Therefore, the working medium flows out of the compressor 11, flows through the first heat exchanger 12, then flows through the second heat exchanger 13, and after performing other heat exchanges, finally returns to the compressor 11, forming a working medium loop, and completing a cycle.

The heating branch includes the first heat exchanger 12, the first trunk line 10a is connected in parallel with the first heat exchanger 12, and the second trunk line 10b is connected in parallel with the first heat exchanger 12. The controller is configured to control the air exhaust of the compressor 11 to be in communication with at least one of the first heat exchanger 12, the first trunk line 10a, and the second trunk line 10b, to implement heat exchange with the at least one of the first heat exchanger 12, the first trunk line 10a, and the second trunk line 10b.

The heating branch is connected in parallel with the first trunk line 10a, and the heating branch is connected in parallel with the second trunk line 10b. The first heat exchanger 12 on the heating branch, the first heat exchange assembly 21 on the first trunk line 10a, and the second heat exchange assembly 22 on the second trunk line 10b are all connected in parallel with each other, and the first heat exchanger 12, the first heat exchange assembly 21, and the second heat exchange assembly 22 all operate independently of each other.

The air exhaust of the compressor 11 is selectively connected to at least one of the heating branch, the first trunk line 10a, and the second trunk line 10b, and the working medium flowing out of the air exhaust of the compressor 11 is a high-temperature and high-pressure gaseous working medium. Therefore, when the air exhaust of the compressor 11 is connected to one of the heating branch, the first trunk line 10a, and the second trunk line 10b, one of the heating branch, the first trunk line 10a, and the second trunk line 10b generates heat.

The controller may control the air exhaust of the compressor 11 to be in communication with the heating branch, to implement heat exchange of the first heat exchanger 12. The controller may further control the air exhaust of the compressor 11 to be in communication with the first trunk line 10a, to control the first heat exchange assembly 21 to exchange heat. The controller may further control the air exhaust of the compressor 11 to be in communication with the second trunk line 10b, to control the second heat exchange assembly 22 to exchange heat. The controller may further control the air exhaust of the compressor 11 to simultaneously be in communication with any two or more of the heating branch, the first trunk line 10a, and the second trunk line 10b, to control the first heat exchanger 12, the first heat exchange assembly 21, or the second heat exchange assembly 22 to simultaneously exchange heat. Optionally, the controller may control the first heat exchanger 12 to heat the passenger compartment while controlling the battery heat exchange module to heat the battery.

In some embodiments of the present disclosure, the air conditioner circulation loop 101 includes a compressor 11, a second heat exchanger 13, and a third heat exchanger 14. The compressor 11 includes an air inlet and an air exhaust, and the air outlet of the compressor 11, the second heat exchanger 13, the third heat exchanger 14, and the air inlet of the compressor 11 are sequentially connected.

The cooling branch includes the third heat exchanger 14, the first trunk line 10a is connected in parallel with the third heat exchanger 14, and the second trunk line 10b is connected in parallel with the third heat exchanger 14. The controller is configured to control the second heat exchanger 13 to be in communication with at least one of the third heat exchanger 14, the first trunk line 10a, and the second trunk line 10b, to implement heat exchange with the at least one of the third heat exchanger 14, the first trunk line 10a, and the second trunk line 10b.

When the air conditioner circulation loop 101 operates, a working medium flows in from the air inlet of the compressor 11. A low-temperature and low-pressure gaseous working medium is compressed by the compressor 11 and then becomes a high-temperature and high-pressure gaseous working medium, and flows out from the air exhaust of the compressor 11. A first port of the second heat exchanger 13 is connected to the air exhaust of the compressor 11, a second port of the second heat exchanger 13 is connected to the third heat exchanger 14, and the third heat exchanger 14 is connected to the air inlet of the compressor 11. Therefore, the working medium flows out of the compressor 11, flows through the second heat exchanger 13, and then flows through the third heat exchanger 14. The working medium releases heat and liquefies in the second heat exchanger 13, then is subjected to throttle and pressure reduction, and then enters the third heat exchanger 14 to absorb heat and vaporize, to perform cooling at the third heat exchanger 14. The gaseous working medium finally returns to the compressor 11, forming a working medium loop, and completing a cycle.

The cooling branch is connected in parallel with the first trunk line 10a, and the cooling branch is connected in parallel with the second trunk line 10b. The third heat exchanger 14 on the cooling branch, the first heat exchange assembly 21 on the first trunk line 10a, and the second heat exchange assembly 22 on the second trunk line 10b are all connected in parallel with each other, and the third heat exchanger 14, the first heat exchange assembly 21, and the second heat exchange assembly 22 all operate independently of each other.

The controller may control the second heat exchanger 13 to be in communication with the cooling branch, to implement heat exchange of the third heat exchanger 14. The controller may further control the second heat exchanger 13 to be in communication with the first trunk line 10a, to control the first heat exchange assembly 21 to exchange heat. The controller may further control the second heat exchanger 13 to be in communication with the second trunk line 10b, to control the second heat exchange assembly 22 to exchange heat. The controller may further control the second heat exchanger 13 to simultaneously be in communication with any two or more of the cooling branch, the first trunk line 10a, and the second trunk line 10b, to control the third heat exchanger 14, the first heat exchange assembly 21, or the second heat exchange assembly 22 to simultaneously exchange heat. Optionally, the controller may control the third heat exchanger 14 to cool the passenger compartment while controlling the battery heat exchange module to cool the battery.

In some embodiments of the present disclosure, a heat pump air conditioner circulation loop 101 includes a compressor 11, a first heat exchanger 12, a second heat exchanger 13, and a third heat exchanger 14. The compressor 11 includes an air inlet and an air exhaust, and the air outlet of the compressor 11, the first heat exchanger 12, the second heat exchanger 13, the third heat exchanger 14, and the air inlet of the compressor 11 are sequentially connected.

When the air conditioner circulation loop 101 operates, a working medium flows in from the air inlet of the compressor 11. A low-temperature and low-pressure gaseous working medium is compressed by the compressor 11 and then becomes a high-temperature and high-pressure gaseous working medium, and flows out from the air exhaust of the compressor 11. A first port of the first heat exchanger 12 is connected to the air exhaust of the compressor 11, a second port of the first heat exchanger 12 is connected to a first port of the second heat exchanger 13, a second port of the second heat exchanger 13 is connected to a first port of the third heat exchanger 14, and a second port of the third heat exchanger 14 is connected to the air inlet of the compressor 11. Therefore, the working medium flows out of the compressor 11, flows through the first heat exchanger 12, flows through the second heat exchanger 13, and then flows through the third heat exchanger 14, and finally returns to the compressor 11, forming a working medium loop, and completing a cycle. The working medium exchanges heat with at least one of the first heat exchanger 12, the second heat exchanger 13, and the third heat exchanger 14, and then forms the gaseous working medium and returns to the air inlet of the compressor 11.

The heating branch includes the first heat exchanger 12, and the cooling branch includes the third heat exchanger 14. The first trunk line 10a is connected in parallel with the first heat exchanger 12, the second trunk line 10b is connected in parallel with the first heat exchanger 12, the first trunk line 10a is connected in parallel with the third heat exchanger 14, and the second trunk line 10b is connected in parallel with the third heat exchanger 14. The second heat exchanger 13 may be located in the heating branch, and the second heat exchanger 13 may alternatively be located in the cooling branch. Alternatively, the second heat exchanger 13 may be used only as a pipeline for the working medium to pass through. The working medium neither absorbs heat nor releases heat at the second heat exchanger 13, which may be selected according to an actual requirement.

The heating branch is connected in parallel with the first trunk line 10a, and the heating branch is connected in parallel with the second trunk line 10b. The first heat exchanger 12 on the heating branch, the first heat exchange assembly 21 on the first trunk line 10a, and the second heat exchange assembly 22 on the second trunk line 10b are all connected in parallel with each other, and the first heat exchanger 12, the first heat exchange assembly 21, and the second heat exchange assembly 22 all operate independently of each other. The cooling branch is connected in parallel with the first trunk line 10a, and the cooling branch is connected in parallel with the second trunk line 10b. The third heat exchanger 14 on the cooling branch, the first heat exchange assembly 21 on the first trunk line 10a, and the second heat exchange assembly 22 on the second trunk line 10b are all connected in parallel with each other, and the third heat exchanger 14, the first heat exchange assembly 21, and the second heat exchange assembly 22 all operate independently of each other.

Because the heating branch is connected in parallel with the first trunk line 10a, and the heating branch is connected in parallel with the second trunk line 10b, the air exhaust of the compressor 11 is selectively connected to at least one of the heating branch, the first trunk line 10a, and the second trunk line 10b, to exchange heat with the at least one of the heating branch, the first trunk line 10a, and the second trunk line 10b. Specifically, the working medium flowing out of the air exhaust of the compressor 11 is a high-temperature and high-pressure gaseous working medium. Therefore, when the air exhaust of the compressor 11 is connected to one of the heating branch, the first trunk line 10a, and the second trunk line 10b, at least one of the heating branch, the first trunk line 10a, and the second trunk line 10b generates heat.

Because the cooling branch is connected in parallel with the first trunk line 10a, and the cooling branch is connected in parallel with the second trunk line 10b, the air inlet of the compressor 11 is selectively connected to at least one of the cooling branch, the first trunk line 10a, and the second trunk line 10b. Similarly, the second heat exchanger 13 connected to the other side of the third heat exchanger 14 is also selectively connected to at least one of the cooling branch, the first trunk line 10a, and the second trunk line 10b, to exchange heat with the at least one of the cooling branch, the first trunk line 10a, and the second trunk line 10b. Optionally, at least one of the cooling branch, the first trunk line 10a, and the second trunk line 10b performs cooling.

The controller is configured to control the air exhaust of the compressor 11 to be in communication with at least one of the first heat exchanger 12, the first trunk line 10a, and the second trunk line 10b, to implement heat exchange with the at least one of the first heat exchanger 12, the first trunk line 10a, and the second trunk line 10b.

The controller may control the air exhaust of the compressor 11 to be in communication with the heating branch, to implement heat exchange of the first heat exchanger 12. The controller may further control the air exhaust of the compressor 11 to be in communication with the first trunk line 10a, to control the first heat exchange assembly 21 to exchange heat. The controller may further control the air exhaust of the compressor 11 to be in communication with the second trunk line 10b, to control the second heat exchange assembly 22 to exchange heat. The controller may further control the air exhaust of the compressor 11 to simultaneously be in communication with any two or more of the heating branch, the first trunk line 10a, and the second trunk line 10b, to control the first heat exchanger 12, the first heat exchange assembly 21, or the second heat exchange assembly 22 to simultaneously exchange heat. Optionally, the controller may control the first heat exchanger 12 to heat the passenger compartment while controlling the battery heat exchange module to heat the battery.

Alternatively, the controller is configured to control communication between the second heat exchanger 13 and at least one of the first trunk line 10a, the second trunk line 10b, and the third heat exchanger 14, to implement heat exchange with the at least one of the first trunk line 10a, the second trunk line 10b, and the third heat exchanger 14.

The controller may control the second heat exchanger 13 to be in communication with the cooling branch, to implement heat exchange of the third heat exchanger 14. The controller may further control the second heat exchanger 13 to be in communication with the first trunk line 10a, to control the first heat exchange assembly 21 to exchange heat. The controller may further control the second heat exchanger 13 to be in communication with the second trunk line 10b, to control the second heat exchange assembly 22 to exchange heat. The controller may further control the second heat exchanger 13 to simultaneously be in communication with any two or more of the heating branch, the first trunk line 10a, and the second trunk line 10b, to control the third heat exchanger 14, the first heat exchange assembly 21, or the second heat exchange assembly 22 to simultaneously exchange heat. Optionally, the controller may control the third heat exchanger 14 to cool the passenger compartment while controlling the battery heat exchange module to cool the battery. Optionally, the controller may control the first heat exchanger 12 to cool the passenger compartment while controlling the battery heat exchange module to heat the battery.

In some embodiments of the present disclosure, the first heat exchanger 12 is an in-vehicle condenser 120, and the in-vehicle condenser 120 is configured to heat the passenger compartment. When the working medium flows in a working medium loop jointly formed by the compressor 11 and the in-vehicle condenser 120, a high-temperature and high-pressure gaseous working medium flowing out of the air exhaust of the compressor 11 exchanges heat at the in-vehicle condenser 120, and the working medium releases heat and liquefies. Then, after the working medium is subjected to throttle and pressure reduction, and absorbs heat and vaporizes, the working medium finally becomes a low-temperature and low-pressure gaseous working medium flowing in from the air inlet of the compressor 11, to complete a cycle. The in-vehicle condenser 120 may alternatively function only as a pipeline, and the working medium flows through the in-vehicle condenser 120 without heat exchange.

In some specific embodiments of the present disclosure, in a working medium loop jointly formed by the compressor 11, the in-vehicle condenser 120, and the second heat exchanger 13, a high-temperature and high-pressure gaseous working medium flowing out of the air exhaust of the compressor 11 exchanges heat at the in-vehicle condenser 120, and the working medium releases heat and liquefies. The in-vehicle condenser 120 is configured to heat the passenger compartment.

The controller may control the air exhaust of the compressor 11 to selectively be in communication with at least one of the in-vehicle condenser 120, the first heat exchange assembly 21, and the second heat exchange assembly 22. The controller is provided to change a flow channel of the working medium in the air conditioner circulation loop 101, so that the passenger compartment can be heated and/or the battery can be heated.

It may be understood that, the air conditioner circulation loop 101 has a plurality of branches as a whole, and the working medium loop jointly formed by the compressor 11, the first heat exchanger 12, the second heat exchanger 13, and the like are all parts of the air conditioner circulation loop 101.

In some embodiments of the present disclosure, the second heat exchanger 13 is an out-of-vehicle condenser 130. The working medium releases heat when passing through the out-of-vehicle condenser 130, and the out-of-vehicle condenser 130 may generate heat. For example, in winter when an ambient temperature is low, components of the vehicle need to be preheated and started. The out-of-vehicle condenser 130 generates heat to the components, so that a start speed of the vehicle can be increased. The out-of-vehicle condenser 130 may alternatively function only as a pipeline, and the working medium flows through the out-of-vehicle condenser 130 without heat exchange.

In some embodiments of the present disclosure, the third heat exchanger 14 is an evaporator 140, and the evaporator 140 is configured to cool the passenger compartment.

When the working medium flows in a working medium loop jointly formed by the compressor 11 and the evaporator 140, a high-temperature and high-pressure gaseous working medium flowing out of the air exhaust of the compressor 11 exchanges heat in the pipeline, and the working medium releases heat and liquefies. Then, the working medium is subjected to throttle and pressure reduction to enter the evaporator 140, and absorbs heat and vaporizes at the evaporator 140, to cool the evaporator 140. The working medium finally becomes a low-temperature and low-pressure gaseous working medium flowing in from the air inlet of the compressor 11, to complete a cycle.

In some specific embodiments of the present disclosure, in a working medium loop jointly formed by the compressor 11, the second heat exchanger 13, and the evaporator 140, a high-temperature and high-pressure gaseous working medium flowing out of the air exhaust of the compressor 11 exchanges heat at the second heat exchanger 13, and the working medium releases heat and liquefies. Then the working medium is subjected to throttle and pressure reduction to flow into the evaporator 140, and absorbs heat and vaporizes at the evaporator 140, which is configured to cooling the passenger compartment. Then, the working medium becomes a low-temperature and low-pressure gaseous working medium, and flows into the air inlet of the compressor 11, to complete a cycle.

The controller may control the second heat exchanger 13 to selectively be in communication with at least one of the evaporator 140, the first heat exchange assembly 21, and the second heat exchange assembly 22. The controller is provided to change a flow channel of the working medium in the air conditioner circulation loop 101, so that the passenger compartment can be cooled and/or the battery can be cooled.

In some specific embodiments of the present disclosure, in a working medium loop jointly formed by the compressor 11, the in-vehicle condenser 120, the out-of-vehicle condenser 130, and the evaporator 140, a high-temperature and high-pressure gaseous working medium flowing out of the air exhaust of the compressor 11 exchanges heat at the in-vehicle condenser 120, and the working medium releases heat and liquefies. The in-vehicle condenser 120 is configured to heat the passenger compartment. The in-vehicle condenser 120 may alternatively be used only as a channel, and the working medium flows through the in-vehicle condenser 120 without heat exchange. Then, the working medium continues to flow to the out-of-vehicle condenser 130, and the working medium may perform heat exchange at the out-of-vehicle condenser 130 to release heat for the second time. Alternatively, the working medium may only pass through the out-of-vehicle condenser 130, and does not exchange heat at the out-of-vehicle condenser 130. The liquefied working medium after releasing heat is subjected to throttle and pressure reduction to flow into the evaporator 140, and absorbs heat and vaporizes at the evaporator 140, which is configured to cooling the passenger compartment. Then, the working medium becomes a low-temperature and low-pressure gaseous working medium, and flows into the air inlet of the compressor 11, to complete a cycle.

The controller may control the air exhaust of the compressor 11 to selectively be in communication with at least one of the in-vehicle condenser 120, the first heat exchange assembly 21, and the second heat exchange assembly 22. In addition, the controller may further control the second heat exchanger 13 to selectively be in communication with at least one of the evaporator 140, the first heat exchange assembly 21, and the second heat exchange assembly 22. The controller is provided to change a flow channel of the working medium in the air conditioner circulation loop 101, so that the heat management system 100 can operate in different working conditions, and the heat management system 100 in the present disclosure has a strong functionality.

When the controller controls the air exhaust of the compressor 11 to be in communication with the in-vehicle condenser 120, the controller controls the out-of-vehicle condenser 130 to be in communication with the evaporator 140, and the controller controls the air exhaust of the compressor 11 not to be in communication with the first trunk line 10a and the second trunk line 10b, the working medium passes through the in-vehicle condenser 120 without heat exchange, the working medium releases heat when passing through the out-of-vehicle condenser 130, and the working medium absorbs heat when passing through the evaporator 140, so that the heat management system 100 can achieve a working condition of independently cooling the passenger compartment.

When the controller controls the air exhaust of the compressor 11 to be in communication with the in-vehicle condenser 120, the controller controls the out-of-vehicle condenser 130 to be in communication with the first trunk line 10a and the second trunk line 10b, the controller controls the air exhaust of the compressor 11 not to be in communication with the first trunk line 10a and the second trunk line 10b, and the out-of-vehicle condenser 130 is not in communication with the evaporator 140, the working medium passes through the in-vehicle condenser 120 without heat exchange, the working medium releases heat when passing through the out-of-vehicle condenser 130, and the working medium absorbs heat when passing through the first heat exchange assembly 21 and/or the second heat exchange assembly 22, so that the heat management system 100 can achieve a working condition of cooling the battery.

When the controller controls the air exhaust of the compressor 11 to be in communication with the in-vehicle condenser 120, the controller controls the out-of-vehicle condenser 130 to be in communication with the first trunk line 10a and the second trunk line 10b, the out-of-vehicle condenser 130 is in communication with the evaporator 140, and the controller controls the air exhaust of the compressor 11 not to be in communication with the first trunk line 10a and the second trunk line 10b, the working medium passes through the in-vehicle condenser 120 without heat exchange, the working medium releases heat when passing through the out-of-vehicle condenser 130, the working medium absorbs heat when passing through the first heat exchange assembly 21 and/or the second heat exchange assembly 22, and the working medium absorbs heat when passing through the evaporator 140, so that the heat management system 100 can achieve a working condition of cooling the passenger compartment while cooling the battery.

When the controller controls the air exhaust of the compressor 11 to be in communication with the in-vehicle condenser 120, and the controller controls the air exhaust of the compressor 11 not to be in communication with the first trunk line 10a and the second trunk line 10b, the working medium releases heat when passing through the in-vehicle condenser 120, so that the heat management system 100 can achieve a working condition of heating the passenger compartment.

When the controller controls the air exhaust of the compressor 11 to be in communication with the first trunk line 10a and the second trunk line 10b, the controller controls the air exhaust of the compressor 11 not to be in communication with the in-vehicle condenser 120, the working medium releases heat when passing through the first heat exchange assembly 21 and/or the second heat exchange assembly 22, so that the heat management system 100 can achieve a working condition of heating the battery.

When the controller controls the air exhaust of the compressor 11 to be in communication with the in-vehicle condenser 120, and the controller controls the air exhaust of the compressor 11 to be in communication with the first trunk line 10a and the second trunk line 10b, the working medium releases heat when passing through the in-vehicle condenser 120, and the working medium releases heat when passing through the first heat exchange assembly 21 and/or the second heat exchange assembly 22, so that the heat management system 100 can achieve a working condition of simultaneously heating the passenger compartment and the battery.

In some embodiments of the present disclosure, the heat management system 100 includes a first air exhaust channel 10c. The battery heat exchange module is connected to the air inlet through the first air exhaust channel 10c, and the working medium flowing through the battery heat exchange module may flow back to the air inlet through the first air exhaust channel 10c. For example, when the battery is cooled, the working medium flows out of the air exhaust, after releasing heat at the out-of-vehicle condenser 130, absorbs heat at the battery heat exchange module, and then flows back to the air inlet through the first air exhaust channel 10c.

The heat management system 100 further includes a second air exhaust channel 10d connected to the air exhaust. The second air exhaust channel 10d is connected to the first air exhaust channel 10c. Therefore, the battery heat exchange module is connected to the air exhaust through the second air exhaust channel 10d, and the working medium may flow to the battery heat exchange module through the second air exhaust channel 10d. For example, when the battery is heated, the working medium flows out of the air exhaust, flows to the battery heat exchange module through the second air exhaust channel, and releases heat at the battery heat exchange module.

The heat management system 100 further includes a third air exhaust channel 10e communicating the air exhaust with the in-vehicle condenser 120. The working medium may flow to the out-of-vehicle condenser 130 through the third air exhaust channel 10e, and releases heat at the in-vehicle condenser 120.

In some embodiments of the present disclosure, the controller includes a number of control valve groups, and the control valve groups operate to enable the air exhaust to be in communication with at least one of the in-vehicle condenser 120 and the battery heat exchange module, so that a working medium from the air exhaust flows to the in-vehicle condenser 120 or the battery heat exchange module. The control valve group is provided to control a flow direction of the working medium, and to control operation of the heat management system 100.

In some specific embodiments of the present disclosure, a control valve group includes a first on-off valve 51, a second on-off valve 52, and a third on-off valve 53. The first on-off valve 51 is connected in series to the second air exhaust channel 10d, and the third on-off valve 53 is connected between the out-of-vehicle condenser 130 and the air exhaust, in other words, the third on-off valve 53 is connected in series to the third air exhaust channel 10e. The second on-off valve 52 is connected in series to the first air exhaust channel 10c, and when the second on-off valve 52 is off, a working medium from the second air exhaust channel 10d is prevented from flowing to an air return inlet.

The first on-off valve 51 may control on-off of the second air exhaust channel 10d, to control whether the working medium flows from the air exhaust to the battery heat exchange module. When the first on-off valve 51 is off, the working medium is prevented from flowing to the battery heat exchange module. The third on-off valve 53 may control on-off of the third air exhaust channel, to control whether the working medium flows from the air exhaust to the out-of-vehicle condenser 130, and when the third on-off valve 53 is off, the working medium is prevented from flowing to the out-of-vehicle condenser 130.

The first air exhaust channel 10c is connected to the air return inlet, the second air exhaust channel 10d is connected to the air exhaust, and the second air exhaust channel 10d is connected to the first air exhaust channel 10c. When the first on-off valve 51 controls the second air exhaust channel 10d to be on, a working medium flowing out of the air exhaust flows from the second air exhaust channel 10d to the first air exhaust channel 10c, and then directly flows back to the air return inlet. Therefore, the second on-off valve 52 is arranged in the first air exhaust channel 10c, and the second on-off valve 52 can control on-off of the first air exhaust channel 10c, so that when the second on-off valve 52 is off, the working medium from the second air exhaust channel 10d is prevented from flowing to the air inlet.

In some embodiments of the present disclosure, a fourth electronic expansion valve 64 is further included, and the fourth electronic expansion valve 64 is connected in parallel with the third on-off valve 53.

In some embodiments of the present disclosure, the heat management system 100 further includes a first switch valve 41 and a second switch valve 42. The first switch valve 41 is connected in series between a second end of the battery heat exchange module and the third heat exchanger 14, and the second switch valve 42 is connected in series between the second end of the battery heat exchange module and the second heat exchanger 13. The first switch valve 41 may control on/off between the battery heat exchange module and the third heat exchanger 14, and the second switch valve 42 may control on/off between the battery heat exchange module and the second heat exchanger 13. When one of the first switch valve 41 and the second switch valve 42 is on, the first trunk line 10a is connected in parallel with the first heat exchanger 12, the second trunk line 10b is connected in parallel with the first heat exchanger 12, the first trunk line 10a is connected in parallel with the third heat exchanger 14, and the second trunk line 10b is connected in parallel with the third heat exchanger 14.

In some specific embodiments of the present disclosure, the first switch valve 41 is configured as a first one-way valve 41, and the first one-way valve 41 is configured for the working medium to flow from the battery heat exchange module to the third heat exchanger 14. The first one-way valve 41 may control the working medium to flow from the battery heat exchange module to the third heat exchanger 14 stably, to improve flexibility of the working medium, avoid reverse flow of the working medium, and improve operating stability of the heat management system 100. In addition, the first one-way valve 41 can work stably and continuously, so that active control can be reduced. This facilitates operation and control.

In some specific embodiments of the present disclosure, the second switch valve 42 is configured as a second one-way valve 42, and the second one-way valve 42 is configured for the working medium to flow from the second heat exchanger 13 to the battery heat exchange module. The second one-way valve 42 may control the working medium to flow from the second heat exchanger 13 to the battery heat exchange module stably, to improve the flexibility of the working medium, avoid reverse flow of the working medium, and improve the operating stability of the heat management system 100. In addition, the second one-way valve 42 can work stably and continuously, so that active control can be reduced. This facilitates operation and control.

In some embodiments of the present disclosure, a first sensor 31 and a second sensor 32 are arranged in the first trunk line 10a, the first sensor 31 is located at a first end of the first heat exchange assembly 21, and the second sensor 32 is located at a second end of the first heat exchange assembly 21. A third sensor 33 and a fourth sensor 34 are further arranged in the second trunk line 10b, the third sensor 33 is located at a first end of the second heat exchange assembly 22, and the fourth sensor 34 is located at a second end of the second heat exchange assembly 22.

The sensors are provided to intuitively and accurately obtain various values of the working medium in the first trunk line 10a and various values of the working medium in the second trunk line 10b. The controller may control flow of the working medium in the first trunk line 10a and the second trunk line 10b based on the temperature of the battery. This not only facilitates operation, but also enables the battery to quickly reach a proper operating temperature, thereby improving operating stability of the battery.

In some specific embodiments of the present disclosure, the first sensor 31 is configured as a pressure sensor, and the first sensor 31 may obtain a pressure of the working medium in the first trunk line 10a. The second sensor 32 is configured as a temperature sensor, and the second sensor 32 may obtain a temperature of the working medium in the first trunk line 10a. The third sensor 33 is configured as a pressure sensor, and the third sensor 33 may obtain a pressure of the working medium in the second trunk line 10b. The fourth sensor 34 is configured as a temperature sensor, and the fourth sensor 34 may obtain a temperature of the working medium in the second trunk line 10b.

In some embodiments of the present disclosure, a first sensor 31, a second sensor 32, and a first flow rate regulating element are arranged in the first trunk line 10a. The first sensor 31 is located at the first end of the first heat exchange assembly 21, the first flow rate regulating element is located at the second end of the first heat exchange assembly 21, and the second sensor 32 is arranged between the second end of the first heat exchange assembly 21 and the first flow rate regulating element. A third sensor 33, a fourth sensor 34, and a second flow rate regulating element are further arranged in the second trunk line 10b. The third sensor 33 is located at the first end of the second heat exchange assembly 22, the second flow rate regulating element is located at the second end of the second heat exchange assembly 22, and the fourth sensor 34 is arranged between the second end of the second heat exchange assembly 22 and the second flow rate regulating element.

In some specific embodiments of the present disclosure, the first sensor 31 is configured as a pressure sensor, and the first sensor 31 may obtain a pressure of the working medium in the first trunk line 10a. The second sensor 32 is configured as a temperature sensor, and the second sensor 32 may obtain a temperature of the working medium in the first trunk line 10a. The third sensor 33 is configured as a pressure sensor, and the third sensor 33 may obtain a pressure of the working medium in the second trunk line 10b. The fourth sensor 34 is configured as a temperature sensor, and the fourth sensor 34 may obtain a temperature of the working medium in the second trunk line 10b.

The first flow rate regulating element may regulate a flow rate of the working medium in the first trunk line 10a, thereby regulating a pressure in the first trunk line 10a, to implement throttle and pressure reduction functions. The third flow rate regulating element may regulate a flow rate of the working medium in the second trunk line 10b, thereby regulating a pressure in the second trunk line 10b, to implement the throttle and pressure reduction functions. In this way, the pressure of the working medium in the first trunk line 10a and the second trunk line 10b is kept within a safety range, the working medium in the first trunk line 10a and the second trunk line 10b is prevented from being at an excessively large pressure to break through a pipeline and cause damage to the battery, and the operating stability of the battery is improved.

When the working medium flows in a working medium loop jointly formed by the compressor 11, the in-vehicle condenser 120, the out-of-vehicle condenser 130, and the battery heat exchange module, the working medium releases heat at the in-vehicle condenser 120 or the out-of-vehicle condenser 130, and then is subjected to throttle and pressure reduction through the first flow rate regulating element and/or the second flow rate regulating element to become a low-temperature and low-pressure liquid working medium. After evaporating and absorbing heat at the battery heat exchange module, the working medium becomes a low-temperature and low-pressure gaseous working medium, and the low-temperature and low-pressure gaseous working medium flows into the compressor 11 from the air inlet, to complete a cycle.

In some embodiments of the present disclosure, the heat exchange element further includes a third switch valve and a fourth switch valve, the third switch valve is arranged in the first trunk line 10a, and the fourth switch valve is arranged in the second trunk line 10b.

The third switch valve may control on/off of the first trunk line 10a, and the fourth switch valve may control on/off of the second trunk line 10b, to control flow or stagnation of the working medium in the first trunk line 10a or the second trunk line 10b. The third switch valve and the fourth switch valve operate independently of each other.

When the third switch valve is turned on, the first trunk line 10a is connected in parallel with the third heat exchanger 14, and the first trunk line 10a is selectively connected in parallel with the first heat exchanger 12. When the fourth switch valve is turned on, the second trunk line 10b is connected in parallel with the third heat exchanger 14, and the second trunk line 10b is selectively connected in parallel with the first heat exchanger 12.

In some specific embodiments of the present disclosure, a first electronic expansion valve 61 is arranged in the first trunk line 10a, and a second electronic expansion valve 62 is arranged in the second trunk line 10b. The first sensor 31 is located at the first end of the first heat exchange assembly 21, the first electronic expansion valve 61 is located at the second end of the first heat exchange assembly 21, and the second sensor 32 is arranged between the second end of the first heat exchange assembly 21 and the first electronic expansion valve 61. The third sensor 33 is located at the first end of the second heat exchange assembly 22, the second electronic expansion valve 62 is located at the second end of the second heat exchange assembly 22, and the fourth sensor 34 is arranged between the second end of the second heat exchange assembly 22 and the second electronic expansion valve 62.

The electronic expansion valve has a flow rate regulating function, and the electronic expansion valve can reduce a pressure of a working medium flowing through. The electronic expansion valve further has an on-off function, and can further selectively block the pipeline, to control flow or stagnation of the working medium in the pipeline in which the electronic expansion valve is located. Therefore, when the first electronic expansion valve 61 is arranged in the first trunk line 10a, the first flow rate regulating element and the third switch valve can be removed; and similarly, when the second electronic expansion valve 62 is arranged in the second trunk line 10b, the second flow rate regulating element and the fourth switch valve can be removed, to reduce a quantity of elements, and reduce arrangement difficulty.

In some specific embodiments of the present disclosure, a fifth switch valve is arranged at a first end of the evaporator 140, and the fifth switch valve is connected in series between the evaporator 140 and the air inlet of the compressor 11. The fifth switch valve may control on/off of a pipeline in which the evaporator 140 is located. When the fifth switch valve is turned on, the working medium may flow to the compressor 11 through the evaporator 140.

In some specific embodiments of the present disclosure, the fifth switch valve is configured as a third one-way valve 43, and the third one-way valve 43 is configured for the working medium to flow from the evaporator 140 to the compressor 11. The third one-way valve 43 may control the working medium to flow from the evaporator 140 to the compressor 11 stably, to improve the flexibility of the working medium, avoid reverse flow of the working medium, and improve the operating stability of the heat management system 100. In addition, the third one-way valve 43 can work stably and continuously, so that active control can be reduced. This facilitates operation and control.

In some specific embodiments of the present disclosure, a third electronic expansion valve 63 is arranged at a second end of the evaporator 140, and the third electronic expansion valve 63 is connected in series between the out-of-vehicle condenser 130 and the evaporator 140. The electronic expansion valve has a flow rate regulating function, and the third electronic expansion valve 63 can reduce a pressure of a working medium flowing through. The electronic expansion valve further has an on-off function, and can further selectively block the pipeline, to control whether the working medium flows to the evaporator 140.

When the working medium flows in a working medium loop jointly formed by the compressor 11, the in-vehicle condenser 120, the out-of-vehicle condenser 130, and the evaporator 140, the working medium releases heat at the in-vehicle condenser 120 or the out-of-vehicle condenser 130, and then is subjected to throttle and pressure reduction through the third electronic expansion valve 63 to become a low-temperature and low-pressure liquid working medium. After evaporating and absorbing heat at the evaporator 140, the working medium becomes a low-temperature and low-pressure gaseous working medium, and the low-temperature and low-pressure gaseous working medium flows into the compressor 11 from the air inlet, to complete a cycle.

In some embodiments of the present disclosure, the heat management system 100 further includes a bypass flow channel 10f, a fourth on-off valve 54 is connected in series in the bypass flow channel 10f, and the bypass flow channel 10f is connected in parallel with the fifth switch valve, the evaporator 140, and the third electronic expansion valve 63 that are connected in series. The fourth on-off valve 54 may control flow and isolation of the bypass flow channel 10f. When the fourth on-off valve 54 turns on the bypass flow channel 10f, the working medium flows back to the air inlet through the bypass flow channel 10f. When the fourth on-off valve 54 blocks the bypass flow channel 10f, the working medium returns to the air inlet through a flow channel in which the evaporator 140 is located.

In some specific embodiments of the present disclosure, a fifth on-off valve 55 is arranged at a first end of the out-of-vehicle condenser 130, and the fifth on-off valve 55 is connected in series between the out-of-vehicle condenser 130 and the air exhaust of the compressor 11. When the fifth on-off valve 55 is turned on, the working medium may flow to the out-of-vehicle condenser 130.

In some specific embodiments of the present disclosure, a fourth one-way valve 44 is arranged at a second end of the out-of-vehicle condenser 130. The fourth one-way valve 44 is configured for the working medium to flow out of the out-of-vehicle condenser 130, to improve flexibility of the working medium, and avoid reverse flow of the working medium.

In some embodiments of the present disclosure, the heat management system 100 further includes a sixth on-off valve 56, and the sixth on-off valve 56 is arranged on a side of the first switch valve 41 away from the battery heat exchange module. When the sixth on-off valve 56 is turned on, the working medium may flow from the battery heat exchange module to the evaporator 140.

In some embodiments of the present disclosure, the heat management system 100 further includes a fifth one-way valve 45. The fifth one-way valve 45 is arranged between the battery heat exchange module and the air inlet of the compressor 11. The fifth one-way valve 45 is configured for the working medium to flow from the battery heat exchange module to the air inlet of the compressor 11, to prevent the working medium flowing to the air inlet from flowing to the heat exchange assembly, thereby improving use safety of the heat exchange assembly.

In some embodiments of the present disclosure, the heat management system 100 further includes a gas-liquid separator 15, and the gas-liquid separator 15 is in communication with the air inlet of the compressor 11. After being subjected to throttle and evaporating, the working medium becomes a low-temperature and low-pressure gaseous working medium. Because it cannot be completely ensured that all of the working medium becomes the gaseous working medium through evaporation and heat absorption, the working medium needs to flow into the gas-liquid separator 15 before flowing into the compressor 11 again. The gas-liquid separator 15 separates gaseous working mediums and liquid working mediums, and drives only the low-temperature and low-pressure gaseous working mediums to flow to the compressor 11, to prevent liquid hammering of liquid drops on functional components in the compressor 11, and ensure safe and normal operation of the compressor 11.

In some embodiments of the present disclosure, the heat management system 100 further includes a series branch 10g. One end of the series branch 10g is connected to the first trunk line 10a, and the other end of the series branch 10g is connected to the second trunk line 10b. The controller is further configured to control, based on the temperature of the battery, the series branch 10g to connect the first trunk line 10a with the second trunk line 10b in series, so that the first trunk line 10a and the second trunk line 10b exchange heat simultaneously.

In some specific embodiments of the present disclosure, a first interface of the first heat exchange assembly 21 is connected to a second interface of the second heat exchange assembly 22 through the series branch 10g. The working medium flows into a second interface of the first heat exchange assembly 21, then flows through the first heat exchange assembly 21, then flows to the second heat exchange assembly 22 through the series branch 10g, and finally flows out of a first interface of the second heat exchange assembly 22.

In some embodiments of the present disclosure, the series branch 10g includes a series switch valve 57, and the first interface of the first heat exchange assembly 21 is connected to the second interface of the second heat exchange assembly 22 through the series switch valve 57. The series switch valve 57 may control on/off of the series branch 10g. When the series switch valve 57 blocks the series branch 10g, the first trunk line 10a and the second trunk line 10b are connected in parallel. When the series switch valve 57 connects the series branch 10g, the first trunk line 10a and the second trunk line 10b may be connected in series.

In some embodiments of the present disclosure, the first sensor 31 is arranged between one end of the series branch 10g and the first interface of the first heat exchange assembly 21, and the third sensor 33 is arranged between the other end of the series branch 10g and the second interface of the second heat exchange assembly 22. When the first heat exchange assembly 21 and the second heat exchange assembly 22 are connected in series, the first sensor 31, the second sensor 32, the third sensor 33, and the fourth sensor 34 may all detect information about the working medium.

In some embodiments of the present disclosure, the heat management system 100 further includes a parallel switch valve 58. The parallel switch valve 58 is arranged on one side of the first interface of the first heat exchange assembly 21 and the first interface of the second heat exchange assembly 22. The parallel switch valve 58 may control on/off of the first trunk line 10a and the second trunk line 10b. When the parallel switch valve 58 is turned on, the first trunk line 10a and the second trunk line 10b may be connected in parallel.

In some embodiments of the present disclosure, the first heat exchange assembly 21 is arranged on one side of the battery, and the second heat exchange assembly 22 is arranged on the other side of the battery, to perform heat exchange on different sides of the battery, thereby improving heat exchange efficiency for the battery.

In some specific embodiments of the present disclosure, the first heat exchange assembly 21 is a first heat exchange plate, the second heat exchange assembly 22 is a second heat exchange plate, and the first heat exchange plate and the second heat exchange plate are arranged on two opposite sides of the battery. In comparison with a design manner in which one heat exchange plate is provided, the first heat exchange plate and the second heat exchange plate can cool or heat the two opposite sides of the battery, which can improve cooling or heating efficiency of the battery, enable the battery to quickly reach a proper operating temperature, and improve the operating stability of the battery.

In some embodiments of the present disclosure, at least one of the first heat exchange assembly 21 and the second heat exchange assembly 22 includes a number of heat exchange assemblies, and the number of heat exchange assemblies are connected in parallel. The number of heat exchange assemblies are provided to increase an area for exchanging heat with the battery, thereby further improving the heat exchange efficiency for the battery.

In some embodiments of the present disclosure, one heat exchange assembly is arranged in an electrode heating area of the battery, and one heat exchange assembly is arranged in a non-electrode heating area of the battery.

The controller may control, based on the temperature of the battery, the heat exchange assembly arranged in the electrode heating area of the battery to cool down to a large extent, and control the heat exchange assembly arranged in the non-electrode heating area of the battery to cool down to a small extent. Alternatively, the controller may control, based on the temperature of the battery, the heat exchange assembly arranged in the electrode heating area of the battery to cool down, and control the heat exchange assembly arranged in the non-electrode heating area of the battery to heat up.

The following describes an embodiment in which the heat management system 100 operates in different working conditions with reference to FIG. 1.

Embodiment 1 shows a working condition in which only the passenger compartment is cooled.

In the working condition in which only the passenger compartment is cooled, the working medium flows in a working medium loop formed by the compressor 11, the in-vehicle condenser 120, the out-of-vehicle condenser 130, and the evaporator 140. In this case, the first on-off valve 51 blocks the second air exhaust channel 10d, the second on-off valve 52 blocks the first air exhaust channel 10c, the third on-off valve 53 turns on the third air exhaust channel, the fourth on-off valve 54 blocks the bypass flow channel 10f, the fifth on-off valve 55 turns on the pipeline, and the sixth on-off valve 56 blocks the pipeline. The first electronic expansion valve 61 and the second electronic expansion valve 62 block the pipeline, the third electronic expansion valve 63 turn on the pipeline for a throttle function, and the fourth electronic expansion valve 64 blocks the pipeline.

A circulation path of the working medium is sequentially: flowing out of the compressor 11, passing through a first pressure sensor 81, a first temperature sensor 82, the in-vehicle condenser 120, the third on-off valve 53, the fifth on-off valve 55, the out-of-vehicle condenser 130, the fourth one-way valve 44, the third electronic expansion valve 63, the evaporator 140, the third one-way valve 43, the fifth sensor 35, and the gas-liquid separator 15, and finally flowing back to the compressor 11.

A high-temperature and high-pressure gaseous working medium flows out of the air exhaust of the compressor 11, and flows to the in-vehicle condenser 120 through the third air exhaust channel. The in-vehicle condenser 120 functions only as a pipeline, and the working medium continues to flow to the out-of-vehicle condenser 130. The working medium liquefies and releases heat at the out-of-vehicle condenser 130. Then, after being subjected to throttle and pressure reduction through the third electronic expansion valve 63, the working medium flows to the evaporator 140. The working medium absorbs heat and vaporizes at the evaporator 140, and finally, becomes a low-temperature and low-pressure gaseous working medium, and flows into the air inlet of the compressor 11. In this way, the evaporator 140 implements cooling the passenger compartment.

Embodiment 2 shows a working condition in which only the battery is cooled, and the first heat exchange assembly 21 and the second heat exchange assembly 22 operate alone. The first heat exchange assembly 21 operates, and the second heat exchange assembly 22 does not operate.

In the working condition in which only the battery is cooled, the working medium flows in a working medium loop formed by the compressor 11, the in-vehicle condenser 120, the out-of-vehicle condenser 130, and the first heat exchange assembly 21. In this case, the first on-off valve 51 blocks the second air exhaust channel 10d, the second on-off valve 52 turns on the first air exhaust channel 10c, the third on-off valve 53 turns on the third air exhaust channel, the fourth on-off valve 54 blocks the bypass flow channel 10f, the fifth on-off valve 55 turns on the pipeline, and the sixth on-off valve 56 blocks the pipeline. The first electronic expansion valve 61 turns on the pipeline for a throttle function, the second electronic expansion valve 62 blocks the pipeline, the third electronic expansion valve 63 blocks the pipeline, and the fourth electronic expansion valve 64 blocks the pipeline. The parallel switch valve 58 turns on the pipeline, and the series switch valve 57 blocks the series branch 10g.

A circulation path of the working medium is sequentially: flowing out of the compressor 11, flowing to a first branch through the first pressure sensor 81, the first temperature sensor 82, the in-vehicle condenser 120, the third on-off valve 53, the fifth on-off valve 55, the out-of-vehicle condenser 130, the fourth one-way valve 44, the second one-way valve 42, and the working medium flowing to the first branch passing through the first electronic expansion valve 61, the second sensor 32, the first heat exchange assembly 21, the first sensor 31, the parallel switch valve 58, the second on-off valve 52, the fifth one-way valve 45, and the gas-liquid separator 15, and finally flowing back to the compressor 11.

A high-temperature and high-pressure gaseous working medium flows out of the air exhaust of the compressor 11, and flows to the in-vehicle condenser 120 through the third air exhaust channel. The in-vehicle condenser 120 functions only as a pipeline, and the working medium continues to flow to the out-of-vehicle condenser 130. The working medium liquefies and releases heat at the out-of-vehicle condenser 130. Then, after being subjected to throttle and pressure reduction through the first electronic expansion valve 61, the working medium flows to the first heat exchange assembly 21. The working medium absorbs heat and vaporizes at the first heat exchange assembly 21, and becomes a low-temperature and low-pressure gaseous working medium, and flows into the air inlet of the compressor 11. In this way, the first heat exchange plate implements cooling the battery.

Embodiment 3 shows a working condition in which only the battery is cooled, and the first heat exchange assembly 21 and the second heat exchange assembly 22 operate in parallel.

In the working condition in which only the battery is cooled, the working medium flows in a working medium loop formed by the compressor 11, the in-vehicle condenser 120, the out-of-vehicle condenser 130, and the battery heat exchange module. In this case, the first on-off valve 51 blocks the second air exhaust channel 10d, the second on-off valve 52 turns on the first air exhaust channel 10c, the third on-off valve 53 turns on the third air exhaust channel, the fourth on-off valve 54 blocks the bypass flow channel 10f, the fifth on-off valve 55 turns on the pipeline, and the sixth on-off valve 56 blocks the pipeline. The first electronic expansion valve 61 and the second electronic expansion valve 62 turn on the pipeline for a throttle function, the third electronic expansion valve 63 blocks the pipeline, and the fourth electronic expansion valve 64 blocks the pipeline. The parallel switch valve 58 turns on the pipeline, and the series switch valve 57 blocks the series branch 10g.

A circulation path of the working medium is sequentially: flowing out of the compressor 11, flowing to the first branch and a second branch through the first pressure sensor 81, the first temperature sensor 82, the in-vehicle condenser 120, the third on-off valve 53, the fifth on-off valve 55, the out-of-vehicle condenser 130, the fourth one-way valve 44, the second one-way valve 42; a working medium flowing to the first branch passing through the first electronic expansion valve 61, the second sensor 32, the first heat exchange assembly 21, the first sensor 31, the parallel switch valve 58, and a working medium flowing to the second branch passing through the second electronic expansion valve 62, the fourth sensor 34, the second heat exchange assembly 22, the third sensor 33, and flowing out of the second branch; after the working medium flowing to the first branch and the working medium flowing to the second branch are mixed, the mixed working medium passing through the second on-off valve 52, the fifth one-way valve 45, and the gas-liquid separator 15, and finally flowing back to the compressor 11.

A high-temperature and high-pressure gaseous working medium flows out of the air exhaust of the compressor 11, and flows to the in-vehicle condenser 120 through the third air exhaust channel. The in-vehicle condenser 120 functions only as a pipeline, and the working medium continues to flow to the out-of-vehicle condenser 130. The working medium liquefies and releases heat at the out-of-vehicle condenser 130. Then, after being subjected to throttle and pressure reduction through the first electronic expansion valve 61 and the second electronic expansion valve 62, the working medium flows to the first heat exchange assembly 21 and the second heat exchange assembly 22. The working medium absorbs heat and vaporizes at the first heat exchange assembly 21 and the second heat exchange assembly 22 respectively, and becomes a low-temperature and low-pressure gaseous working medium, and flows into the air inlet of the compressor 11. In this way, the first heat exchange plate and the second heat exchange plate implement cooling the battery.

Embodiment 4 shows a working condition in which only the battery is cooled, and the first heat exchange assembly 21 and the second heat exchange assembly 22 operate in series.

In the working condition in which only the battery is cooled, the working medium flows in a working medium loop formed by the compressor 11, the in-vehicle condenser 120, the out-of-vehicle condenser 130, and the battery heat exchange module. In this case, the first on-off valve 51 blocks the second air exhaust channel 10d, the second on-off valve 52 turns on the first air exhaust channel 10c, the third on-off valve 53 turns on the third air exhaust channel, the fourth on-off valve 54 blocks the bypass flow channel 10f, the fifth on-off valve 55 turns on the pipeline, and the sixth on-off valve 56 blocks the pipeline. The first electronic expansion valve 61 and the second electronic expansion valve 62 turn on the pipeline for a throttle function, the third electronic expansion valve 63 blocks the pipeline, and the fourth electronic expansion valve 64 blocks the pipeline. The parallel switch valve 58 blocks the pipeline, and the series switch valve 57 turns on the series branch 10g.

A circulation path of the working medium is sequentially: flowing out of the compressor 11, passing through the first pressure sensor 81, the first temperature sensor 82, the in-vehicle condenser 120, the third on-off valve 53, the fifth on-off valve 55, the out-of-vehicle condenser 130, the fourth one-way valve 44, the second one-way valve 42, the first electronic expansion valve 61, the second sensor 32, the first heat exchange assembly 21, the first sensor 31, the series switch valve 57, the fourth sensor 34, the sensor heat exchange assembly 22, the third sensor 33, the second on-off valve 52, the fifth one-way valve 45, and the gas-liquid separator 15, and finally flowing back to the compressor 11.

A high-temperature and high-pressure gaseous working medium flows out of the air exhaust of the compressor 11, and flows to the in-vehicle condenser 120 through the third air exhaust channel. The in-vehicle condenser 120 functions only as a pipeline, and the working medium continues to flow to the out-of-vehicle condenser 130. The working medium liquefies and releases heat at the out-of-vehicle condenser 130. Then, after being subjected to throttle and pressure reduction through the first electronic expansion valve 61, the working medium flows to the first heat exchange assembly 21 and the second heat exchange assembly 22. The working medium absorbs heat and vaporizes at the first heat exchange assembly 21 and the second heat exchange assembly 22, and becomes a low-temperature and low-pressure gaseous working medium, and flows into the air inlet of the compressor 11. In this way, the first heat exchange plate and the second heat exchange plate implement cooling the battery.

Embodiment 5 shows a working condition in which the passenger compartment is cooled and the battery is cooled. Embodiment 5 is actually a condition in which Embodiment 1 and any one of Embodiment 2 to Embodiment 4 simultaneously operate.

Embodiment 6 shows a working condition in which only the passenger compartment is heated, and a temperature of an environment outside the vehicle is high, so that the out-of-vehicle condenser 130 can absorb heat from the environment outside the vehicle.

In the working condition in which only the passenger compartment is heated, the working medium flows in a working medium loop formed by the compressor 11, the in-vehicle condenser 120, and the out-of-vehicle condenser 130. In this case, the first on-off valve 51 blocks the second air exhaust channel 10d, the second on-off valve 52 blocks the first air exhaust channel 10c, the third on-off valve 53 blocks the third air exhaust channel, the fourth on-off valve 54 turns on the bypass flow channel 10f, the fifth on-off valve 55 turns on the pipeline, and the sixth on-off valve 56 blocks the pipeline. The first electronic expansion valve 61 and the second electronic expansion valve 62 block the pipeline, the third electronic expansion valve 63 blocks the pipeline, and the fourth electronic expansion valve 64 turns on the pipeline for a throttle function.

A circulation path of the working medium is sequentially: flowing out of the compressor 11, passing through a first pressure sensor 81, a first temperature sensor 82, the in-vehicle condenser 120, the fourth electronic expansion valve 64, the fifth on-off valve 55, the out-of-vehicle condenser 130, the fourth one-way valve 44, the fourth on-off valve 54, the fifth sensor 35, and the gas-liquid separator 15, and finally flowing back to the compressor 11.

A high-temperature and high-pressure gaseous working medium flows out of the air exhaust of the compressor 11, and flows to the in-vehicle condenser 120 through the third air exhaust channel 10e. The working medium liquefies and releases heat at the in-vehicle condenser 120. Then, after being subjected to throttle and pressure reduction through the fourth electronic expansion valve 64, the working medium flows to the out-of-vehicle condenser 130. The working medium exchange heat with the environment outside the vehicle at the out-of-vehicle condenser 130, to absorb heat and vaporize, and finally, becomes a low-temperature and low-pressure gaseous working medium, and flows into the air inlet of the compressor 11 along the bypass flow channel 10f. In this way, the in-vehicle condenser 120 implements heating the passenger compartment.

Embodiment 7 shows a working condition in which only the passenger compartment is heated, and a temperature of an environment outside the vehicle is low, so that the out-of-vehicle condenser 130 cannot absorb heat from the environment outside the vehicle.

In the working condition in which only the passenger compartment is heated, the working medium flows in a working medium loop formed by the compressor 11 and the in-vehicle condenser 120. In this case, the first on-off valve 51 blocks the second air exhaust channel 10d, the second on-off valve 52 blocks the first air exhaust channel 10c, the third on-off valve 53 blocks the third air exhaust channel, the fourth on-off valve 54 turns on the bypass flow channel 10f, the fifth on-off valve 55 blocks the pipeline, and the sixth on-off valve 56 turns on the pipeline. The first electronic expansion valve 61 and the second electronic expansion valve 62 block the pipeline, the third electronic expansion valve 63 blocks the pipeline, and the fourth electronic expansion valve 64 turns on the pipeline for a throttle function.

A circulation path of the working medium is sequentially: flowing out of the compressor 11, passing through the first pressure sensor 81, the first temperature sensor 82, the in-vehicle condenser 120, the fourth electronic expansion valve 64, the sixth on-off valve 56, the fourth on-off valve 54, the fifth sensor 35, and the gas-liquid separator 15, and finally flowing back to the compressor 11.

A high-temperature and high-pressure gaseous working medium flows out of the air exhaust of the compressor 11, and flows to the in-vehicle condenser 120 through the third air exhaust channel 10e. The working medium liquefies and releases heat at the in-vehicle condenser 120. Then, after being subjected to throttle and pressure reduction through the fourth electronic expansion valve 64, the working medium flows to the bypass flow channel 10f and flows into the air inlet of the compressor 11. In this way, the in-vehicle condenser 120 implements heating the passenger compartment.

Embodiment 8 shows a working condition in which only the battery is heated when an ambient temperature is high, and the first heat exchange assembly 21 and the second heat exchange assembly 22 operate alone. The first heat exchange assembly 21 operates, and the second heat exchange assembly 22 does not operate.

In the working condition in which only the battery is heated, the working medium flows in a working medium loop formed by the compressor 11, the first heat exchange assembly 21, and the evaporator 140. In this case, the first on-off valve 51 turns on the second air exhaust channel 10d, the second on-off valve 52 blocks the first air exhaust channel 10c, the third on-off valve 53 blocks the third air exhaust channel, the fourth on-off valve 54 blocks the bypass flow channel 10f, the fifth on-off valve 55 blocks the pipeline, and the sixth on-off valve 56 turns on the pipeline. The first electronic expansion valve 61 turns on the pipeline for a throttle function, the second electronic expansion valve 62 blocks the pipeline, the third electronic expansion valve 63 turns on the pipeline for the throttle function, and the fourth electronic expansion valve 64 is blocked. The parallel switch valve 58 turns on the pipeline, and the series switch valve 57 blocks the series branch 10g.

A circulation path of the working medium is sequentially: flowing out of the compressor 11, flowing to the first branch through the first pressure sensor 81, the first temperature sensor 82, and the first on-off valve 51; and the working medium flowing to the first branch passing through the first sensor 31, the first heat exchange assembly 21, the second sensor 32, and the first electronic expansion valve 61, and flowing out of the first branch; and then passing through the first one-way valve 41, the sixth on-off valve 56, the third electronic expansion valve 63, the evaporator 140, the third one-way valve 43, the fifth sensor 35, and the gas-liquid separator 15, and finally flowing back to the compressor 11.

A high-temperature and high-pressure gaseous working medium flows out of the air exhaust of the compressor 11, and flows to the battery heat exchange module through the second air exhaust channel 10d. The working medium liquefies and releases heat at the first heat exchange assembly 21. Then, after being subjected to throttle and pressure reduction through the first electronic expansion valve 61 and the third electronic expansion valve 63, the working medium flows to the evaporator 140. The working medium absorbs heat and vaporizes at the evaporator 140, and finally becomes a low-temperature and low-pressure gaseous working medium, and flows into the air inlet of the compressor 11. In this way, the first heat exchange plate and the second heat exchange plate implement heating the battery.

Embodiment 9 shows a working condition in which only the battery is heated when an ambient temperature is high, and the first heat exchange assembly 21 and the second heat exchange assembly 22 operate in parallel.

In the working condition in which only the battery is heated, the working medium flows in a working medium loop formed by the compressor 11, the battery heat exchange module, and the evaporator 140. In this case, the first on-off valve 51 turns on the second air exhaust channel 10d, the second on-off valve 52 blocks the first air exhaust channel 10c, the third on-off valve 53 blocks the third air exhaust channel, the fourth on-off valve 54 blocks the bypass flow channel 10f, the fifth on-off valve 55 blocks the pipeline, and the sixth on-off valve 56 turns on the pipeline. The first electronic expansion valve 61 and the second electronic expansion valve 62 turn on the pipeline for a throttle function, the third electronic expansion valve 63 turns on the pipeline for the throttle function, and the fourth electronic expansion valve 64 is blocked. The parallel switch valve 58 turns on the pipeline, and the series switch valve 57 blocks the series branch 10g.

A circulation path of the working medium is sequentially: flowing out of the compressor 11, flowing to the first branch and the second branch through the first pressure sensor 81, the first temperature sensor 82, and the first on-off valve 51; a working medium flowing to the first branch passing through the first sensor 31, the first heat exchange assembly 21, the second sensor 32, and the first electronic expansion valve 61, and flowing out of the first branch, and a working medium flowing to the second branch passing through the parallel switch valve 58, the third sensor 33, the second heat exchange assembly 22, the fourth sensor 34, and the second electronic expansion valve 62, and flowing out of the second branch; after the working medium flowing to the first branch and the working medium flowing to the second branch are mixed, the mixed working medium passing through the first one-way valve 41, the sixth on-off valve 56, the third electronic expansion valve 63, the evaporator 140, the third one-way valve 43, the fifth sensor 35, and the gas-liquid separator 15, and finally flowing back to the compressor 11.

A high-temperature and high-pressure gaseous working medium flows out of the air exhaust of the compressor 11, and flows to the battery heat exchange module through the second air exhaust channel 10d. The working medium liquefies and releases heat at the first heat exchange assembly 21 and the second heat exchange assembly 22 respectively. Then, after being subjected to throttle and pressure reduction through the first electronic expansion valve 61, the second electronic expansion valve 62, and the third electronic expansion valve 63, the working medium flows to the evaporator 140. The working medium absorbs heat and vaporizes at the evaporator 140, and finally becomes a low-temperature and low-pressure gaseous working medium, and flows into the air inlet of the compressor 11. In this way, the first heat exchange plate and the second heat exchange plate implement heating the battery.

Embodiment 10 shows a working condition in which only the battery is heated when an ambient temperature is high, and the first heat exchange assembly 21 and the second heat exchange assembly 22 operate in series.

In the working condition in which only the battery is heated, the working medium flows in a working medium loop formed by the compressor 11, the battery heat exchange module, and the evaporator 140. In this case, the first on-off valve 51 turns on the second air exhaust channel 10d, the second on-off valve 52 blocks the first air exhaust channel 10c, the third on-off valve 53 blocks the third air exhaust channel, the fourth on-off valve 54 blocks the bypass flow channel 10f, the fifth on-off valve 55 blocks the pipeline, and the sixth on-off valve 56 turns on the pipeline. The first electronic expansion valve 61 and the second electronic expansion valve 62 turn on the pipeline for a throttle function, the third electronic expansion valve 63 turns on the pipeline for the throttle function, and the fourth electronic expansion valve 64 is blocked. The parallel switch valve 58 blocks the pipeline, and the series switch valve 57 turns on the series branch 10g.

A circulation path of the working medium is sequentially: flowing out of the compressor 11, passing through the first pressure sensor 81, the first temperature sensor 82, the first on-off valve 51, the parallel switch valve 58, the third sensor 33, the second heat exchange assembly 22, the fourth sensor 34, the first sensor 31, the first heat exchange assembly 21, the second sensor 32, the first electronic expansion valve 61, the first one-way valve 41, the sixth on-off valve 56, the third electronic expansion valve 63, the evaporator 140, the third one-way valve 43, the fifth sensor 35, and the gas-liquid separator 15, and finally flowing back to the compressor 11.

A high-temperature and high-pressure gaseous working medium flows out of the air exhaust of the compressor 11, and flows to the battery heat exchange module through the second air exhaust channel 10d. The working medium liquefies and releases heat at the first heat exchange assembly 21 and the second heat exchange assembly 22. Then, after being subjected to throttle and pressure reduction through the first electronic expansion valve 61 and the third electronic expansion valve 63, the working medium flows to the evaporator 140. The working medium absorbs heat and vaporizes at the evaporator 140, and finally becomes a low-temperature and low-pressure gaseous working medium, and flows into the air inlet of the compressor 11. In this way, the first heat exchange plate and the second heat exchange plate implement heating the battery.

Embodiment 11 shows a working condition in which only the battery is heated when an ambient temperature is low, and the first heat exchange assembly 21 and the second heat exchange assembly 22 operate in parallel.

In the working condition in which only the battery is heated, the working medium flows in a working medium loop formed by the compressor 11, the battery heat exchange module, and the evaporator 140. In this case, the first on-off valve 51 turns on the second air exhaust channel 10d, the second on-off valve 52 blocks the first air exhaust channel 10c, the third on-off valve 53 blocks the third air exhaust channel, the fourth on-off valve 54 turns on the bypass flow channel 10f, the fifth on-off valve 55 blocks the pipeline, and the sixth on-off valve 56 turns on the pipeline. The first electronic expansion valve 61 and the second electronic expansion valve 62 turn on the pipeline for a throttle function, the third electronic expansion valve 63 blocks the pipeline, and the fourth electronic expansion valve 64 is blocked. The parallel switch valve 58 turns on the pipeline, and the series switch valve 57 blocks the series branch 10g.

A circulation path of the working medium is sequentially: flowing out of the compressor 11, flowing to the first branch and the second branch through the first pressure sensor 81, the first temperature sensor 82, and the first on-off valve 51; a working medium flowing to the first branch passing through the first sensor 31, the first heat exchange assembly 21, the second sensor 32, and the first electronic expansion valve 61, and flowing out of the first branch, and a working medium flowing to the second branch passing through the parallel switch valve 58, the third sensor 33, the second heat exchange assembly 22, the fourth sensor 34, and the second electronic expansion valve 62, and flowing out of the second branch; after the working medium flowing to the first branch and the working medium flowing to the second branch are mixed, the mixed working medium passing through the first one-way valve 41, the sixth on-off valve 56, the fourth on-off valve 54, the fifth sensor 35, and the gas-liquid separator 15, and finally flowing back to the compressor 11.

A high-temperature and high-pressure gaseous working medium flows out of the air exhaust of the compressor 11, and flows to the battery heat exchange module through the second air exhaust channel 10d. The working medium liquefies and releases heat at the first heat exchange assembly 21 and the second heat exchange assembly 22 respectively. Then, after being subjected to throttle and pressure reduction through the first electronic expansion valve 61, the second electronic expansion valve 62, and the third electronic expansion valve 63, the working medium flows to the compressor 11. The ambient temperature is low, so that the working medium naturally exchanges heat during flow, and finally becomes a low-temperature and low-pressure gaseous working medium, and flows into the air inlet of the compressor 11. In this way, the first heat exchange plate and the second heat exchange plate implement heating the battery.

Embodiment 12 shows a working condition in which the passenger compartment and the battery pack heat are heated at the same time when an ambient temperature is high. Embodiment 12 is actually a condition in which Embodiment 6 and any one of Embodiment 8 to Embodiment 10 simultaneously operate.

The foregoing several embodiments are merely intended for ease of describing the present disclosure and simplifying the descriptions, and are not intended to indicate or imply that the heat management system 100 can only operate according to the cases shown in the embodiments in a specific working condition. Therefore, the embodiments should not be construed as a limitation on the present disclosure.

In some embodiments of the present disclosure, the heat management system further includes a dynamic heat management subsystem 200. The dynamic heat management subsystem 200 includes a fourth heat exchanger 71 and a coolant circulation system. The fourth heat exchanger 71 includes a first channel and a second channel, the first channel is connected to the coolant circulation system, and one end of the second channel is in communication with at least one of the first trunk line 10a and the second trunk line 10b.

The heat management system 100 further includes an air conditioner circulation loop 101, and the air conditioner circulation loop 101 includes a heating branch. One of the first trunk line 10a and the second trunk line 10b is in communication with the second channel, the other one of the first trunk line 10a and the second trunk line 10b is connected in parallel with the heating branch, and the controller is configured to control at least one of the heating branch, the first trunk line 10a, and the second trunk line 10b to exchange heat.

The coolant flows in the first channel, and the working medium flows in the second channel. The first channel and the second channel are both located in the fourth heat exchanger 71, and the first channel and the second channel can exchange heat with each other. When a temperature of a coolant flowing in the second channel is higher than that of a working medium flowing in the first channel, the working medium absorbs heat when flowing through the fourth heat exchanger 71. When the temperature of the coolant flowing in the second channel is lower than that of the working medium flowing in the first channel, the working medium releases heat when flowing through the fourth heat exchanger 71.

In the coolant circulation system, heat exchange may be performed between heat generated by the dynamic heat management subsystem 200 and the working medium, to heat the working medium or cool the working medium by using the heat generated by the dynamic heat management subsystem 200, thereby assisting the battery heat exchange module in exchanging heat for the battery.

In some embodiments of the present disclosure, as shown in FIG. 2, the dynamic heat management subsystem 200 includes at least one of a high-pressure heat management subsystem 201 and an engine heat management subsystem 202.

The high-pressure heat management subsystem 201 may exchange heat with the air conditioner circulation loop 101, or the engine heat management subsystem 202 may exchange heat with the air conditioner circulation loop 101, or both the high-pressure heat management subsystem 201 and the engine heat management subsystem 202 may exchange heat with the air conditioner circulation loop 101.

In some specific embodiments of the present disclosure, the heat management system further includes a high-pressure heat management subsystem 201. The high-pressure heat management subsystem 201 includes a fourth heat exchanger 71 and a coolant circulation system. The fourth heat exchanger 71 includes a first channel and a second channel. The first channel is connected to the coolant circulation system. One end of the second channel is selectively in communication with a second end and the first heat exchanger 12, and the other end of the second channel is connected to the fourth heat exchanger 71.

In some embodiments of the present disclosure, the high-pressure heat management subsystem 201 further includes a charging and distribution/motor assembly 72 and a first radiator 73. The charging and distribution/motor assembly 72 exchanges heat with a motor and an electronic control of the vehicle, and the charging and distribution/motor assembly 72 is connected between the coolant circulation system and the first radiator 73. The first radiator 73 is configured to exchange heat with an environment outside the vehicle.

In some embodiments of the present disclosure, the high-pressure heat management subsystem 201 further includes a switching valve group 74. The switching valve group 74 is connected to two ends of the circulation loop, the charging and distribution/motor assembly 72, and the first radiator 73 respectively. The switching valve group 74 operates to switch the high-pressure heat management subsystem 201 between different working conditions. Specifically, the switching valve group 74 is a three-way valve.

The switching valve group 74 may control a flowing direction of the coolant, and may heat the working medium by using heat generated by the motor and the electronic control of the vehicle, or may dissipate the heat generated by the motor and the electronic control of the vehicle to outside the vehicle through the first radiator 73.

In some embodiments of the present disclosure, the high-pressure heat management system 100 further includes a water pump 75. The water pump 75 is arranged between the charging and distribution/motor assembly 72 and the fourth heat exchanger 71. The water pump 75 is configured to pump the coolant from the charging and distribution/motor assembly 72 to the fourth heat exchanger 71.

The high-pressure heat management subsystem 201 has a first working condition. In the first working condition, the charging and distribution/motor assembly 72 and the second channel form a first loop. The coolant flowing out of the charging and distribution/motor assembly 72 flows to the fourth heat exchanger 71 under the action of the water pump 75. After exchanging heat with the working medium in the first channel in the second channel of the fourth heat exchanger 71, the coolant flows back to the charging and distribution/motor assembly 72 to exchange heat with the motor and the electronic control of the vehicle.

When the working medium circulation loop has a heat absorption requirement, and the high-pressure heat management subsystem 201 has no heat dissipation requirement, the high-pressure heat management subsystem 201 may operate according to the first working condition. A high-temperature coolant flowing out of the charging and distribution/motor assembly 72 flows into the second channel, and exchanges heat with a low-temperature working medium flowing through the first channel, to transfer the heat generated by the motor and the electronic control of the vehicle to the working medium circulation loop. In this way, the heat generated by the motor and the electronic control of the vehicle is effectively used, thereby improving a heating capacity of the heat management system 100 and reducing energy consumption of the heat management system 100.

The high-pressure heat management subsystem 201 further has a second working condition. In the second working condition, the charging and distribution/motor assembly 72, the first radiator 73, and the second channel form a second loop. The coolant flowing out of the charging and distribution/motor assembly 72 flows to the fourth heat exchanger 71 under the action of the water pump 75. After exchanging heat with the working medium in the first channel in the second channel of the fourth heat exchanger 71, the coolant flows to the first radiator 73. After heat exchange in the first radiator 73, the coolant flows back to the charging and distribution/motor assembly 72 to exchange heat with the motor and the electronic control of the vehicle.

When the working medium circulation loop has a heat absorption requirement, the high-pressure heat management subsystem 201 has a heat dissipation requirement, and the heat dissipation requirement of the high-pressure heat management subsystem 201 is higher than the heat absorption requirement of the working medium circulation loop, the high-pressure heat management subsystem 201 may operate according to the second working condition. A high-temperature coolant flowing out of the charging and distribution/motor assembly 72 flows into the second channel, and exchanges heat with a low-temperature working medium flowing through the first channel, to transfer the heat generated by the motor and the electronic control of the vehicle to the working medium circulation loop. A temperature of the coolant is still high after one heat exchange. Therefore, the coolant continues to flow to the first radiator 73, and exchanges heat with an environment outside the vehicle for the second time, to perform heat dissipation. The heat generated by the motor and the electronic control of the vehicle is effectively used, thereby improving the heating capacity of the heat management system 100 and reducing the energy consumption of the heat management system 100.

In addition, when the working medium circulation loop has a heat absorption requirement, heat generated by the high-pressure heat management subsystem 201 is insufficient, and the temperature of the coolant is lower than a temperature of the environment outside the vehicle, the high-pressure heat management subsystem 201 may also operate according to the second working condition. The coolant exchanges heat with the environment outside the vehicle at the first radiator 73, to increase the temperature of the coolant. The coolant flows to the charging and distribution/motor assembly 72 and the fourth heat exchanger 71 through the circulation loop, and exchanges heat with the low-temperature working medium flowing through the first channel, to transfer heat from the environment outside the vehicle to the working medium circulation loop and the high-pressure heat management subsystem 201. In this way, the heat can be effectively used, thereby improving the heating capacity of the heat management system 100 and reducing the energy consumption of the heat management system 100.

The high-pressure heat management subsystem 201 further includes a mixed working condition. In the mixed working condition, the first loop and the second loop circulate simultaneously. The coolant flowing out of the charging and distribution/motor assembly 72 flows to the third heat exchanger 14 under the action of the water pump 75. After exchanging heat with the working medium in a first channel in a second channel of the third heat exchanger 14, the coolant partially directly flows back to the charging and distribution/motor assembly 72 to exchange heat with the motor and the electronic control of the vehicle, and partially flows to the first radiator 73. After heat exchange in the first radiator 73, the coolant flows back to the charging and distribution/motor assembly 72 to exchange heat with the motor and the electronic control of the vehicle.

When the working medium circulation loop has a heat absorption requirement, the high-pressure heat management subsystem 201 has a heat dissipation requirement, and the heat absorption requirement of the working medium circulation loop is higher than the heat dissipation requirement of the high-pressure heat management subsystem 201, the high-pressure heat management subsystem 201 may operate according to the mixed working condition.

A high-temperature coolant flowing out of the charging and distribution/motor assembly 72 flows into the second channel, and exchanges heat with a low-temperature working medium flowing through the first channel, to transfer the heat generated by the motor and the electronic control of the vehicle to the working medium circulation loop. A part of the coolant that performs heat exchange flows back to the charging and distribution/motor assembly 72, and the other part of the coolant continues to flow to the first radiator 73, and exchanges heat with the environment outside the vehicle for the second time, to perform heat dissipation. The heat generated by the motor and the electronic control of the vehicle is effectively used, thereby improving the heating capacity of the heat management system 100 and reducing the energy consumption of the heat management system 100.

The high-pressure heat management subsystem 201 has the first working condition, the second working condition, and the mixed working condition, and coolants in circulation loops of the first working condition, the second working condition, and the mixed working condition all heat the working medium in the working medium circulation loop. Therefore, operation of the heat management system 100 in different working conditions may also cooperate with operation of the high-pressure heat management subsystem 201 in the different working conditions.

For example, in a working condition in which only the passenger compartment is heated, the heat management system 100 may cooperate with the first working condition, the second working condition, and the mixed working condition of the high-pressure heat management subsystem 201.

In some embodiments of the present disclosure, the heat management system further includes an engine heat management subsystem 202. The engine heat management subsystem 202 includes a fifth heat exchanger 76 and a coolant circulation system. The fifth heat exchanger 76 includes a third channel and a fourth channel. The third channel is connected to the coolant circulation system. One end of the fourth channel is selectively in communication with a second end b and the first heat exchanger 12, and the other end of the fourth channel is connected to the third heat exchanger 14.

In some embodiments of the present disclosure, the engine heat management subsystem 202 further includes an engine assembly 77 and a second radiator 78. The engine assembly 77 exchanges heat with an engine of the vehicle, and the engine assembly 77 is connected between the coolant circulation system and the second radiator 78. The second radiator 78 is configured to exchange heat with the environment outside the vehicle.

The vehicle 1000 according to the embodiments of the present disclosure includes any one of the foregoing heat management system 100.

According to the vehicle 1000 in the embodiments of the present disclosure, the foregoing heat management system 100 is provided, so that a quantity of times of maintenance and battery replacement can be reduced, charging efficiency and convenience of use of the vehicle are improved, and this facilitates a reasonable layout of the vehicle.

In the descriptions of this specification, descriptions such as reference terms "an embodiment", "some embodiments", "schematic embodiment", "example", "specific example", or "some examples" mean that a specific feature, structure, material, or characteristic described with reference to the embodiment or example is included in the present disclosure or at least one embodiment or example of the present disclosure. In this specification, the schematic representations of the foregoing terms do not necessarily represent the same embodiment or example. In addition, the described specific features, structures, materials, or characteristics may be combined in a proper manner in any one or more of the embodiments or examples.

Although the embodiments of the present disclosure have been shown and described, a person of ordinary skill in the art may understand that: various changes, modifications, replacements, and variations may be made to the embodiments without departing from the principles and spirit of the present disclosure, and the scope of the present disclosure is defined by the appended claims and equivalents thereof.

## Claims

1. A control method, configured to a heat management system, the control method comprising:
obtaining a heat exchange signal; and
controlling at least one of a first trunk line in the heat management system and a second trunk line in the heat management system to exchange heat with a battery, the first trunk line being configured to exchange heat with a first area in the battery, the second trunk line being configured to exchange heat with a second area in the battery, and the first area being different from the second area.

2. The control method of the heat management system according to claim 1, wherein a temperature of one of the first area and the second area is higher than a temperature of another of the first area and the second area;
or a temperature rise rate of the first area is higher than a temperature rise rate of the second area;
or the first area is an electrode area of the battery.

3. The control method of the heat management system according to claim 1, wherein when a first condition is met, at least one of the first trunk line and the second trunk line is controlled to cool the battery; and
the first condition comprises at least one of a battery temperature ≥ a first temperature threshold, a charging power ≥ a first power threshold, a discharging power ≥ a second power threshold, a charging voltage ≥ a first voltage threshold, a discharging voltage ≥ a second voltage threshold, a charging current ≥ a first current threshold, a discharging current ≥ a second current threshold, or a user cooling instruction.

4. The control method of the heat management system according to claim 1, wherein when a second condition is met, at least one of the first trunk line and the second trunk line is controlled to heat the battery; and
the second condition comprises at least one of a battery temperature ≤ a second temperature threshold, a discharging power ≤ a third power threshold, a discharging voltage ≤ a third voltage threshold, a discharging current ≤ a third current threshold, ending of battery self-heating, or a user heating instruction.

5. The control method according to claim 1, wherein heat exchange parameters of the first trunk line and the second trunk line are different.

6. The control method of the heat management system according to claim 5, wherein heat exchange parameters of a first heat exchange unit and a second heat exchange unit are different; and the first heat exchange unit is configured to exchange heat with the first area and is arranged in the first trunk line, and the second heat exchange unit is configured to exchange heat with the second area and is arranged in the second trunk line.

7. The control method of the heat management system according to claim 5, wherein the heat exchange parameters being different comprises: heat exchange quantities are different or heat exchange efficiencies are different.

8. The control method of the heat management system according to claim 5, wherein a flow rate of the first trunk line and a flow rate of the second trunk line are different.

9. The control method of the heat management system according to claim 8, wherein a pressure of the first trunk line and a pressure of the second trunk line are different, causing the flow rates to be different.

10. The control method of the heat management system according to any one of claims 1 to 9, further comprising:
when a third condition is met, the heat exchange parameters of the first trunk line and the second trunk line are different.

11. The control method of the heat management system according to claim 10, wherein the third condition comprises: a temperature rise rate V_{H} of the first area ≥ a first rate threshold; or
a difference V₀ between the temperature rise rate of the first area and the temperature rise rate of the second area ≥ a first temperature rise threshold; or
a difference T₀ between a temperature T_{H} of the first area and a temperature T_{L} of the second area ≥ a third temperature threshold, and T₀ = T_{H} - T_{L}.

12. The control method of the heat management system according to claim 11, wherein the temperature T_{H} of the first area is a maximum temperature of the battery, and the temperature T_{L} of the second area is a minimum temperature of the battery.

13. The control method of the heat management system according to any one of claims 1 to 9, further comprising:
when a fourth condition is met, cooling, by at least one of the first trunk line and the second trunk line, the battery, the heat exchange parameters of the first trunk line and the second trunk line being different.

14. The control method of the heat management system according to claim 13, wherein the fourth condition comprises: the battery temperature ≥ a fourth temperature threshold.

15. The control method of the heat management system according to claim 13 or 14, wherein the fourth condition comprises: at least one of a battery charging power ≥ a first threshold, a battery discharging power ≥ a second threshold, or a motor power ≥ a third threshold.

16. The control method of the heat management system according to claim 13 or 14, wherein the fourth condition comprises: at least one of the charging voltage ≥ a third voltage threshold, or the discharging voltage ≥ a fourth voltage threshold.

17. The control method of the heat management system according to claim 13 or 14, wherein the fourth condition comprises: at least one of the charging current ≥ a fourth current threshold, or the discharging current ≥ a fifth current threshold.

18. The control method of the heat management system according to claim 13, wherein the fourth condition comprises at least one of the ending of battery self-heating or an area cooling instruction inputted by a user.

19. The control method of the heat management system according to any one of claims 1 to 9, further comprising:
when a fifth condition is met, heating, by at least one of the first trunk line and the second trunk line, the battery, the heat exchange parameters of the first trunk line and the second trunk line being different.

20. The control method of the heat management system according to claim 19, wherein the fifth condition comprises: the battery temperature ≤ a fifth temperature threshold.

21. The control method of the heat management system according to claim 19, wherein the fifth condition comprises: at least one of a battery charging power ≤ a fourth threshold, or a battery discharging power ≤ a fifth threshold.

22. The control method of the heat management system according to claim 19, wherein the fifth condition comprises: at least one of the discharging voltage ≤ a fifth voltage threshold, or the discharging current ≤ a sixth current threshold.

23. The control method of the heat management system according to claim 19, wherein the fifth condition comprises: at least one of the charging voltage ≤ a sixth voltage threshold, a charging current ≤ a seventh current threshold, or an area heating instruction inputted by a user.

24. The control method of the heat management system according to any one of claims 1 to 23, the first area being preferentially cooled, wherein the temperature of the first area of the battery is higher than the temperature of the second area; or the temperature rise rate of the first area of the battery is higher than the temperature rise rate of the second area of the battery; or the first area of the battery is the electrode area of the battery, and the second area of the battery is a non-electrode area of the battery.

25. The control method of the heat management system according to any one of claims 1 to 23, when a sixth condition is met, the first area being preferentially cooled.

26. The control method of the heat management system according to claim 25, wherein the sixth condition comprises: the difference between the temperature of the first area and the temperature of the second area ≥ a first temperature difference threshold, and the battery temperature ≥ the fourth temperature threshold; or the difference between the temperature rise rate of the first area and the temperature rise rate of the second area ≥ a first rate difference threshold, and the battery temperature ≥ the fourth temperature threshold.

27. The control method of the heat management system according to any one of claims 24 to 26, wherein the first area being preferentially cooled comprises:
a flow rate of a heat exchange medium in the first trunk line is greater than a flow rate of a heat exchange medium in the second trunk line.

28. The control method of the heat management system according to claim 27, wherein a difference between the flow rate of the heat exchange medium in the first trunk line and the flow rate of the heat exchange medium in the second trunk line ≥ a first flow rate threshold.

29. The control method of the heat management system according to any one of claims 24 to 26, wherein the first area being preferentially cooled comprises:
a temperature of a heat exchange medium at an inlet end of the first trunk line is lower than a temperature of a heat exchange medium at an inlet end of the second trunk line.

30. The control method of the heat management system according to any one of claims 24 to 26, wherein the first area being preferentially cooled comprises:
a pressure at an outlet end of the first trunk line is less than a pressure at an outlet end of the second trunk line.

31. The control method of the heat management system according to any one of claims 1 to 23, the second area being preferentially heated; and the temperature of the first area of the battery being higher than the temperature of the second area; or the temperature rise rate of the first area of the battery being higher than the temperature rise rate of the second area of the battery; or the first area of the battery being the electrode area of the battery, and the second area of the battery being a non-electrode area of the battery.

32. The control method of the heat management system according to any one of claims 1 to 23, when a seventh condition is met, the second area being preferentially heated.

33. The control method of the heat management system according to claim 32, wherein the seventh condition comprises: the difference between the temperature of the first area and the temperature of the second area ≥ a second temperature difference threshold, and the battery temperature ≤ the fifth temperature threshold; or the difference between the temperature rise rate of the first area and the temperature rise rate of the second area ≥ a second rate difference threshold, and the battery temperature ≤ the fifth temperature threshold.

34. The control method of the heat management system according to any one of claims 31 to 33, wherein the second area being controlled to be preferentially heated comprises:
a flow rate of a heat exchange medium in the second trunk line is greater than a flow rate of a heat exchange medium in the first trunk line.

35. The control method of the heat management system according to claim 34, wherein a difference between the flow rate of the heat exchange medium in the second trunk line and the flow rate of the heat exchange medium in the first trunk line ≥ a second flow rate threshold.

36. The control method of the heat management system according to any one of claims 31 to 33, wherein the second area being controlled to be preferentially heated comprises:
a temperature of a heat exchange medium at an inlet end of the second trunk line is higher than a temperature of a heat exchange medium at an inlet end of the first trunk line.

37. The control method of the heat management system according to claim 36, wherein a difference between the temperature of the heat exchange medium at the inlet end of the second trunk line and the temperature of the heat exchange medium at the inlet end of the first trunk line ≥ a sixth threshold.

38. The control method of the heat management system according to any one of claims 31 to 33, wherein the second area being preferentially heated comprises:
a pressure at an outlet end of the second trunk line is greater than a pressure at an outlet end of the first trunk line.

39. The control method of the heat management system according to any one of claims 24 to 38,
when an eighth condition is met, the first area stopping being preferentially cooled, and/or the second area stopping being preferentially heated; and the temperature of the first area of the battery being higher than the temperature of the second area; or the temperature rise rate of the first area of the battery being higher than the temperature rise rate of the second area of the battery; or the first area of the battery being the electrode area of the battery, and the second area of the battery being a non-electrode area of the battery.

40. The control method of the heat management system according to claim 39, wherein the eighth condition comprises: a temperature difference between the first area and the second area is less than a seventh threshold; or
the temperature rise rates of the first area and the second area are the same; or
the difference between the temperature rise rates of the first area and the second area is less than an eighth threshold.

41. A vehicle, performing the control method of the heat management system according to any one of claims 1 to 40.
